# EUROPEAN PATENT SPECIFICATION

(11) **EP 4 032 768 B1**
(45) Date of publication and mention of the grant of the patent: **04.10.2023**
(21) Application number: 20866285.8
(22) Date of filing: 31.08.2020
(51) Int. Cl.: B60W 20/40, B60K 6/48, B60W 10/02, B60K 6/387, B60K 6/485

(54) **LEANING VEHICLE**
NEIGEFAHRZEUG
VÉHICULE INCLINABLE

(30) Priority: 18.09.2019 WO PCT/JP2019/036475
(43) Date of publication of application: 27.07.2022
(73) Proprietor: Yamaha Hatsudoki Kabushiki Kaisha, Iwata-shi, Shizuoka 438-8501 (JP)
(72) Inventor: TAKEUCHI, Yoshihiko, Iwata-shi, Shizuoka 438-8501 (JP); HINO, Haruyoshi, Iwata-shi, Shizuoka 438-8501 (JP)
(74) Representative: Zinkler, Franz
(86) International application number: PCT/JP2020/032888
(87) International publication number: WO 2021/054102

(56) References cited:
- WO-A1-2018/016085
- WO-A1-2019/017087
- JP-A- 2008 006 977
- JP-A- 2008 030 744

## Description

### Technical Field

The present invention relates to a leaning vehicle.

### Background Art

When a driver of a leaning vehicle, such as a motorcycle or the like, shifts gears, generally, the driver performs the following actions: the driver operates the clutch lever with his/her hand to disengage the clutch and shifts gears with his/her foot; and thereafter, the driver engages the clutch by operating the clutch lever with his/her hand. In recent years, there have been some suggested techniques to shift gears not manually but automatically by using an actuator, such as a servomotor or the like. For example, Patent Literature 1 discloses a leaning vehicle including an automatic transmission. In the leaning vehicle disclosed in Patent Literature 1, a clutch motor that drives the clutch and a shift motor that drives the transmission allow automatic gear shifting of the leaning vehicle.

### Citation List

### Patent Literature

Patent Literature 1: Japanese Patent Application Publication No. 2011-80604 Patent literature 2: JP 2008006977 A discloses a control device of a hybrid vehicle for preventing an increase in fuel consumption while avoiding a degradation in travelling feeling.

### Summary of Invention

### Technical Problem

When a driver of a manual-transmission-type leaning vehicle starts the leaning vehicle, the driver operates the clutch lever with his/her hand to disengage the clutch and shifts the gear from neutral to first gear with his/her foot, and thereafter, the driver operates the clutch lever with his/her hand to engage the clutch. In order for the leaning vehicle to start moving smoothly, the driver moves his/her hand gently and accurately to engage the clutch smoothly.

It is also expected that a leaning vehicle including an automatic transmission starts moving smoothly. An objective of the present invention is to provide a leaning vehicle with an automatic transmission that starts moving more smoothly.

### Solution to the Problem

For example, automatic transmissions for use in four-wheeled vehicles include a torque converter in many cases. By using a torque converter, it is possible to start the vehicle steadily and smoothly. After the engine of the vehicle is started, the engine speed is increased, and the power of the engine is transmitted to the drive wheel gradually via the torque converter. This allows the vehicle to start moving steadily and smoothly.

A torque converter transmits power by using viscosity resistance of a fluid without use of a mechanical part that engages power transmission members to one another. Therefore, in such an automatic transmission with a torque converter, the fluid in the torque converter is stirred when the engine torque is increased, and thereafter, the engine torque is transmitted to the drive wheel. Accordingly, in a vehicle with a torque converter, the time lag between an increase of the engine torque and an increase of the force that drives the drive wheel is likely to be big.

When a leaning vehicle is turning a corner, the leaning vehicle leans toward the inside of the corner. While turning a corner, the leaning vehicle gains speed to increase the centrifugal force acting on the center of mass of the vehicle, whereby the leaning vehicle comes from a leaning state back to an upright state. It is requested for such leaning vehicles to have high responsiveness to an acceleration operation, as compared with an automobile that does not lean toward the inside of a corner. Therefore, in many cases, automatic transmissions for use in leaning vehicles do not include a torque converter but include a clutch motor that drives a clutch.

Patent Literature 1 describes a motorcycle that does not include a torque converter and automatically engages the clutch by using an actuator (motor). Patent Literature 1 states that it is necessary to control the gear-shift timing, which varies depending on the condition of the motorcycle by use of a calculator, and also that it is not easy to carry out a steady and smooth operation for clutch engagement and gear shifting.

The present inventors studied how to smoothly start a vehicle with automatic transmission that does not include a torque converter. The present inventors especially conducted a study about a start operation of a leaning vehicle that automatically engages the clutch by using a motor.

In the start operation of the leaning vehicle, a control unit causes the clutch motor to move by a specified amount such that the leaning vehicle comes from a clutch-off state in which the output power of the engine is not transmitted to the clutch to a clutch-on state in which the output power of the engine is transmitted to the clutch. In this regard, a half-clutch range possibly varies depending on the condition of the clutch, the half-clutch range being from a clutch-in point to a clutch-stall point, the clutch-in point being a point where the output power of the engine starts to be transmitted to the clutch, the clutch-stall point being a point where the clutch starts rotating in synchronization with rotation of the engine . Specifically, when the clutch is in such a condition whereby it expands by heat or is worn, the half-clutch range changes. This causes a failure in performing smooth clutch engagement. Therefore, in order to perform smooth clutch engagement by use of a clutch motor whatever condition the clutch is in, it is necessary to control the clutch engagement timing by use of a calculator. Hence, the present inventors concluded that the control unit needs to carry out complicated procedures to control the clutch motor.

Then, the present inventors conducted a study about how to start a motorcycle smoothly without any need to consider the condition of the clutch of the motorcycle. As a result of the study, the present inventors found that it is possible to start a leaning vehicle steadily and smoothly without any need to consider the condition of the clutch of the leaning vehicle by using an electric motor connected to the crankshaft of the engine. Specifically, the clutch motor is controlled to increase the distribution ratio of the output power of the electric motor to the drive wheel, whereby the leaning vehicle starts moving. After the leaning vehicle starts moving, the clutch motor is controlled to decrease the distribution ratio of the output power of the electric motor to the drive wheel and thereby increase the distribution ratio of the output power of the electric motor to the engine, whereby the engine is started. This operation allows the leaning vehicle to start moving smoothly.

In order to attain the above-mentioned objective, a leaning vehicle (1) according to an aspect of the present invention is configured as follows.

The leaning vehicle (1) includes:
an engine including a rotatable crankshaft and configured to output power generated through gas combustion as a torque and a rotation speed of the crankshaft;
a permanent-magnet-type electric motor that is connected to the crankshaft in such a manner as to rotate at a fixed speed ratio to the rotation speed of the crankshaft, and is supplied with electric power to output power;
a drive wheel that receives power outputted from at least either the engine or the permanent-magnet-type electric motor;
a clutch that changes the distribution ratio of the output power of the permanent-magnet-type electric motor between the engine and the drive wheel;
a clutch motor that operates the clutch; and
a control unit that is configured to:
   when a start condition is to be satisfied in the leaning vehicle, actuate the permanent-magnet-type electric motor while the engine is in a stopped state, and also control the clutch motor to operate the clutch to distribute the output power of the permanent-magnet-type electric motor to at least the drive wheel, whereby the leaning vehicle starts moving; and
   after the drive wheel starts to be rotated, control the clutch motor to operate the clutch so as to decrease the distribution ratio of the output power of the permanent-magnet-type electric motor to the drive wheel, thereby increasing the distribution ratio of the output power of the permanent-magnet-type electric motor to the engine, whereby the engine is started.

Thus, the leaning vehicle (1) includes an engine, a permanent-magnet-type electric motor, a drive wheel, a clutch, a clutch motor, and a control unit.

The engine includes a rotatable crankshaft, and the engine outputs power generated through gas combustion as a torque and a rotation speed of the crankshaft.

The permanent-magnet-type electric motor is connected to the crankshaft in such a manner as to rotate at a fixed speed ratio to the rotation speed of the crankshaft, and the permanent-magnet-type electric motor is supplied with electric power and outputs power.

The drive wheel receives power outputted from at least either the engine or the permanent-magnet-type electric motor.

The clutch distributes the output power of the permanent-magnet-type electric motor between the engine and the drive wheel and changes the distribution ratio of the output power of the permanent-magnet-type electric motor between the engine and the drive wheel.

The clutch motor operates the clutch.

The control unit controls the clutch motor to operate the clutch as follows. When a start condition is to be satisfied in the leaning vehicle, the clutch is operated to distribute the output power of the permanent-magnet-type electric motor to at least the drive wheel, whereby the leaning vehicle starts moving. After the drive wheel starts to be rotated, the clutch is operated to decrease the distribution ratio of the output power of the permanent-magnet-type electric motor to the drive wheel, thereby increasing the distribution ratio of the output power of the permanent-magnet-type electric motor to the engine, whereby the engine is started. With this control of the control unit, combustion in the engine is started after the distribution ratio of the output power of the permanent-magnet-type electric motor to the engine is increased.

In the leaning vehicle (1), the control unit controls the clutch motor such that the clutch is operated to distribute the output power of the permanent-magnet-type electric motor to at least the drive wheel, whereby the leaning vehicle starts moving. In this way, the output power of the permanent-magnet-type electric motor is transmitted to the drive wheel, and the leaning vehicle is started by the output power of the permanent-magnet-type electric motor. In the leaning vehicle (1), after the leaning vehicle starts moving, the control unit controls the clutch motor such that the clutch is operated to decrease the distribution ratio of the output power of the permanent-magnet-type electric motor to the drive wheel, thereby increasing the distribution ratio of the output power of the permanent-magnet-type electric motor to the engine. Since the distribution ratio of the output power of the permanent-magnet-type electric motor to the engine increases, the power to drive the engine increases, and the engine of the leaning vehicle starts. In this way, in the leaning vehicle (1), the permanent-magnet-type electric motor drives the leaning vehicle to start moving, and after the leaning vehicle starts moving, the output power of the permanent-magnet-type electric motor is used to start the engine. Accordingly, the leaning vehicle (1) starts moving more smoothly.

A leaning vehicle (2) according to another aspect of the present invention may be configured as follows.

The leaning vehicle (2) is the leaning vehicle (1) wherein:
the clutch is located on a power transmission route between the engine and the drive wheel; and
the clutch is capable of being between a state of disconnecting the power transmission route and a state of connecting the power transmission route, thereby changing the distribution ratio of the output power of the permanent-magnet-type electric motor between the engine and the drive wheel.

In the leaning vehicle (2), the clutch located on the power transmission route between the engine and the drive wheel is capable of being between a state of disconnecting the power transmission route and a state of connecting the power transmission route, and thereby the distribution ratio of the output power of the permanent-magnet-type electric motor between the engine and the drive wheel is changed. When the leaning vehicle (2) starts moving, the drive source for the drive wheel can be changed from the permanent-magnetic-magnet-type electric motor to the engine smoothly. Accordingly, the leaning vehicle (2) starts moving more smoothly.

A leaning vehicle (3) according to another aspect of the present invention may be configured as follows.

The leaning vehicle (3) is the leaning vehicle (2) wherein:
the control unit controls the clutch motor such that the clutch is capable of being toward the state of connecting the power transmission route to distribute the output power of the permanent-magnet-type electric motor to at least the drive wheel and such that the clutch is capable of being toward the state of disconnecting the power transmission route to decrease the distribution ratio of the output power of the permanent-magnet-type electric motor to the drive wheel.

In the leaning vehicle (3), the control unit controls the clutch motor such that the clutch is capable of being toward the state of connecting the power transmission route to distribute the output power of the permanent-magnet-type electric motor to at least the drive wheel. Accordingly, the output power of the permanent-magnet-type electric motor is transmitted to the drive wheel, and the leaning vehicle (3) starts moving smoothly. In the leaning vehicle (3), the control unit also controls the clutch motor such that the clutch is capable of being toward the state of disconnecting the power transmission route to decrease the distribution ratio of the output power of the permanent-magnet-type electric motor to the drive wheel. Accordingly, the distribution ratio of the output power of the permanent-magnet-type electric motor to the engine increases, and the power to drive the engine increases. This configuration makes it possible to start the engine smoothly. Thus, the leaning vehicle (3) starts moving more smoothly.

A leaning vehicle (4) according to another aspect of the present invention may be configured as follows.

The leaning vehicle (4) is any one of the leaning vehicles (1) to (3), further comprising:
a multi-speed transmission that is located on a power transmission route between the permanent-magnet-type electric motor and the drive wheel, and changes the speed ratio between the permanent-magnet-type electric motor and the drive wheel in a step-by-step manner; and
a shift motor that drives the multi-speed transmission,
wherein
when the leaning vehicle satisfies the start condition, the control unit: causes the shift motor to change the multi-speed transmission to a non-neutral state; causes the clutch motor to drive the clutch to distribute the output power of the permanent-magnet-type electric motor to the drive wheel; and causes the permanent-magnet-type electric motor to start motoring.

Thus, the leaning vehicle (4) includes a multi-speed transmission, and a shift motor that drives the multi-speed transmission. In the leaning vehicle (4), when the start condition is to be satisfied in the leaning vehicle, the control unit causes the shift motor to change the multi-speed transmission to a non-neutral state; causes the clutch motor to drive the clutch to permit distribution of the output power of the permanent-magnet-type electric motor to the drive wheel. Thereby, the leaning vehicle comes to a state in which the drive wheel can receive power outputted from the permanent-magnet-type electric motor. In this state, the permanent-magnet-type electric motor starts motoring, and the leaning vehicle starts moving. Therefore, the leaning vehicle (4) starts moving more smoothly while changing the speed ratio in a step-by-step manner.

A leaning vehicle (5) according to another aspect of the present invention may be configured as follows.

The leaning vehicle (5) is the leaning vehicle (4), wherein:
after the drive wheel starts to be rotated, the control unit causes the clutch motor to operate the clutch so as to decrease the distribution ratio of the output power of the permanent-magnet-type electric motor to the drive wheel, thereby increasing the distribution ratio of the output power of the permanent-magnet-type electric motor to the engine, whereby the engine is started; and
while the engine is being started, the control unit causes the shift motor to shift up the multi-speed transmission.

In the leaning vehicle (5), after the drive wheel starts to be rotated, the clutch is operated so as to decrease the distribution ratio of the permanent-magnet-type electric motor to the drive wheel. Thereby, the distribution ratio of the power from the clutch to the multi-speed transmission decreases, which facilitates shifting-up of the multi-speed transmission. Additionally, after the drive wheel starts to be rotated, the engine can be started, and the engine, after getting started, is likely to drive the drive wheel smoothly. Therefore, the leaning vehicle (5) starts moving smoothly and performs gear-shifting certainly and smoothly.

A leaning vehicle (6) according to another aspect of the present invention may be configured as follows.

The leaning vehicle (6) is the leaning vehicle (4) or (5), wherein the multi-speed transmission is a dog transmission.

The multi-speed transmission of the leaning vehicle (6) has a simple structure.

A leaning vehicle (7) according to another aspect of the present invention may be configured as follows.

The leaning vehicle (7) is any one of the leaning vehicles (1) to (6), further comprising an acceleration grip that is attached to a steering handle, is operable by a driver of the leaning vehicle, and sends a signal in accordance with the amount of operation of the acceleration grip via the control unit;
wherein
when the control unit receives, from the acceleration grip, a signal indicating that the acceleration grip has been operated, the control unit determines that the start condition is to be satisfied in the leaning vehicle.

In the leaning vehicle (7), at least when the control unit receives, from the acceleration grip, a signal indicating that the acceleration grip has been operated, the control unit determines that the start condition is to be satisfied in the leaning vehicle. Thus, operation of the acceleration grip makes the leaning vehicle (7) operable to start moving smoothly.

A leaning vehicle (8) according to another aspect of the present invention may be configured as follows.

The leaning vehicle (8) is the leaning vehicle (7), further comprising a seat including an in-built sensor that, when a driver sits on the seat, sends an occupant signal indicating that the seat is being occupied to the control unit,
wherein
when the control unit receives at least the occupant signal from the in-built sensor of the seat and the signal indicating that the acceleration grip has been operated from the acceleration grip, the control unit determines that the start condition is to be satisfied in the leaning vehicle.

In the leaning vehicle (8), when the control unit receives at least the occupant signal from the in-built sensor of the seat and the signal indicating that the acceleration grip has been operated from the acceleration grip, the control unit determines that the start condition is to be satisfied in the leaning vehicle. Thus, the leaning vehicle (8) does not become operable to start moving smoothly even by operation of the acceleration grip until a driver sits on the seat.

A leaning vehicle (9) according to another aspect of the present invention may be configured as follows.

The leaning vehicle (9) is any one of the leaning vehicles (1) to (8), without a torque converter being located on the power transmission route between the engine and the drive wheel.

In the leaning vehicle (9), the time lag between an increase of the engine torque and an increase of the force that drives the drive wheel is small.

A leaning vehicle (10) according to another aspect of the present invention may be configured as follows.

The leaning vehicle (10) is any one of the leaning vehicles (1) to (9), further comprising:
a front wheel connected to a front fork, supported by a vehicle body of the leaning vehicle, in such a manner as to be rotatable; and
a rear wheel connected to a rear arm, supported by the vehicle body of the leaning vehicle, in such a manner as to be rotatable,
the drive wheel being either the front wheel(s) or being the rear wheel(s).

The leaning vehicle (10) has a simple structure.

The technical terms used herein are only to specify embodiments and are not to define the present invention. The term "and/or" used herein includes one of the associated items in a list and all possible combinations of the associated items. The terms "including", "comprising", or "having", and variations thereof used herein specify the presence of stated features, steps, operations, elements, components, and/or equivalents thereof, and can include one or more of steps, operations, elements, components, and/or their groups. The terms "attached to", "connected to", "coupled to" and equivalents thereof are used in a broad sense, and these terms encompass all cases in which something is attached, connected or coupled to something else whether directly or indirectly. Further, the terms "connected to" and "coupled to" can be used not only in relation to physical or mechanical connection or coupling but also in relation to direct or indirect electrical connection or coupling. Unless otherwise defined, all terms (including technical and scientific terms) used herein have the same meanings as commonly understood by one of ordinary skill in the art to which the present invention pertains. It should be understood that terms, such as those defined in commonly used dictionaries, should be interpreted as having meanings that are consistent with their meanings in the context of the present invention and relevant art and should not be interpreted in an idealized or overly formal sense unless expressly so defined herein. It should be understood that the description of the present invention discloses a number of techniques and steps. Each of these has individual benefit, and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present invention and the claims.

In the present description, a new leaning vehicle will be described. In the following paragraphs, for a complete understanding of the present invention, details of various embodiments will be provided. However, it is clear that one of ordinary skill in the art can carry out the present invention without having these details of embodiments. The present invention should be understood as merely an example of the present invention, and the present invention should not be limited to the embodiments described below and/or shown by the drawings.

The leaning vehicle is, for example, a straddled vehicle that is configured to be able to turn in a leaning posture. The straddled vehicle that is configured to be able to turn in a leaning posture is a straddled vehicle that is configured to turn in an inward leaning posture. Accordingly, the straddled vehicle that is configured to be able to turn in a leaning posture counteracts the centrifugal force applied to the leaning vehicle while the leaning vehicle is turning. The straddled vehicle that is configured to be able to turn in a leaning posture is expected to be frisky, and it is important that the straddled vehicle is highly responsive to a start operation. In the straddled vehicle that is configured to be able to turn in a leaning posture, for example, any torque converter that uses the dynamic action of a fluid is not located on the power transmission route from a power source to a drive wheel.

The straddled vehicle is a type of vehicle in which a driver takes a seat by straddling the seat. The leaning vehicle is, for example, a motorcycle of a scooter type, a moped type, an off-road type or an on-road type. The straddled vehicle that is configured to be able to turn in a leaning posture is a kind of leaning vehicle. The leaning vehicle is not necessarily a two-wheeled motor vehicle and may be, for example, a three-wheeled motor vehicle, an ATV (all-terrain vehicle), or the like. The three-wheeled motor vehicle may have two front wheels and one rear wheel, or may have one front wheel and two rear wheels. The drive wheel of the leaning vehicle may be the rear wheel(s) or front wheel(s).

The engine is the power source of the leaning vehicle. The engine, for example, includes a single-cylinder engine and an engine with two or more cylinders. The engine may be a gasoline engine or a diesel engine.

The permanent-magnet-type electric motor is an electric motor that can be used both to start the engine and to drive the vehicle. The permanent-magnet-type electric motor may be a motor that can generate electric power. The permanent-magnet-type electric motor may be an outer rotor type or an inner rotor type. The permanent-magnet-type electric motor may be a radial gap type or an axial gap type. A statement referring to a permanent-magnet-type electric motor being connected to a crankshaft in such a manner to rotate at a fixed speed ratio to the rotation speed of a crankshaft means that no power cutting means (such as a clutch or the like) or no gear shifting means is located between the permanent-magnet-type electric motor and the crankshaft.

The clutch is a power transmission device located on a power transmission route between a power source and a drive wheel. The clutch is, for example, a friction clutch that pressure-bonds a disk attached to an input shaft and a disk attached to an output shaft together and transmits torque by friction due to the pressure bonding. The friction clutch may be, for example, a wet multiple disk clutch, a dry multiple disk clutch, or the like, but the friction clutch is not limited to these types. However, the friction clutch for use in the leaning vehicle according to the present invention does not include any centrifugal clutches that transmit torque by pressing a clutch shoe that rotates together with an input shaft against a clutch drum located on an output shaft. The clutch does not include a torque converter that transmits power via a fluid.

The clutch motor is a device that drives the clutch. The clutch motor, for example, pressure-bonds the clutch disks together. The clutch motor is, for example, a servomotor. The clutch motor may be any other motor than a servomotor. The clutch motor is controlled to adjust the pressure-bonding load onto the disks of the clutch.

The multi-speed transmission is, for example, a dog transmission. The dog transmission includes a transmission in which at least one drive gear is always in engagement with a driven gear. The multi-speed transmission includes an always-engagement transmission in which all the drive gears are in engagement with driven gears.

The shift motor is a device that drives the gear system of the multi-speed transmission. The shift motor, for example, rotates a shift drum that changes the positions of the gears of the multi-speed transmission. The shift motor is, for example, a servomotor. The shift motor may be any other motor than a servomotor.

The control unit that controls the clutch to cause a start of the engine is not limited to a unit that always controls the clutch to cause a start of the engine. The control unit may control the clutch to cause a start of the engine some time and not to cause a start of the engine other times.

The control unit may include a processor that carries out a program, or alternatively, the control unit may be an electronic circuit.

The start condition is a condition for starting the leaning vehicle from standstill.

### Effect of Invention

The present invention provides a leaning vehicle with an automatic transmission that starts moving more smoothly.

### Brief Description of Drawings

[FIG. 1] FIG. 1 is an illustration diagram of a leaning vehicle according to an embodiment of the present invention.
[FIG. 2] FIG. 2 is an enlarged side view of an example of the leaning vehicle shown in FIG. 1.
[FIG. 3] FIG. 3 is an enlarged left side view of an engine unit of the leaning vehicle shown in FIG. 2.
[FIG. 4] FIG. 4 is an enlarged sectional view of the engine unit shown in FIG. 2.
[FIG. 5] FIG. 5 is a sectional view of a clutch of the engine unit shown in FIGS. 3 and 4 and a mechanism for driving the clutch.
[FIG. 6] FIG. 6 is a sectional view of a multi-speed transmission of the engine unit show in FIGS. 3 and 4.
[FIG. 7] FIG. 7 is a sectional view of a mechanism for driving the multi-speed transmission of the engine unit shown in FIGS. 3 and 4.
[FIG. 8] FIG. 8 is a sectional view of a mechanism for driving the multi-speed transmission of the engine unit shown in FIGS. 3 and 4.
[FIG. 9] FIG. 9 is a sectional view of a brushless motor of the engine unit shown in FIGS. 3 and 4, the sectional view being in a plane perpendicular to the rotation axis of the brushless motor.
[FIG. 10] FIG. 10 is a schematic block diagram showing the electrical configuration of the engine unit shown in FIGS. 3 and 4.
[FIG. 11] FIG. 11 is a flowchart showing a procedure of start control carried out by the control unit of the leaning vehicle shown in FIG. 1.
[FIG. 12] FIG. 12 is a flowchart showing a detailed procedure of the start control carried out by the control unit of the leaning vehicle shown in FIG. 1.
[FIG. 13] FIG. 13 is a flowchart showing a procedure in Flow A in the flowchart shown in FIG. 12.
[FIG. 14] FIG. 14 is a flowchart showing a procedure in Flow B in the flowchart shown in FIG. 12.
[FIG. 15] FIG. 15 is a chart showing the state of the leaning vehicle shown in FIG. 1 in each mode.

### Description of Embodiments

### [Overall Structure]

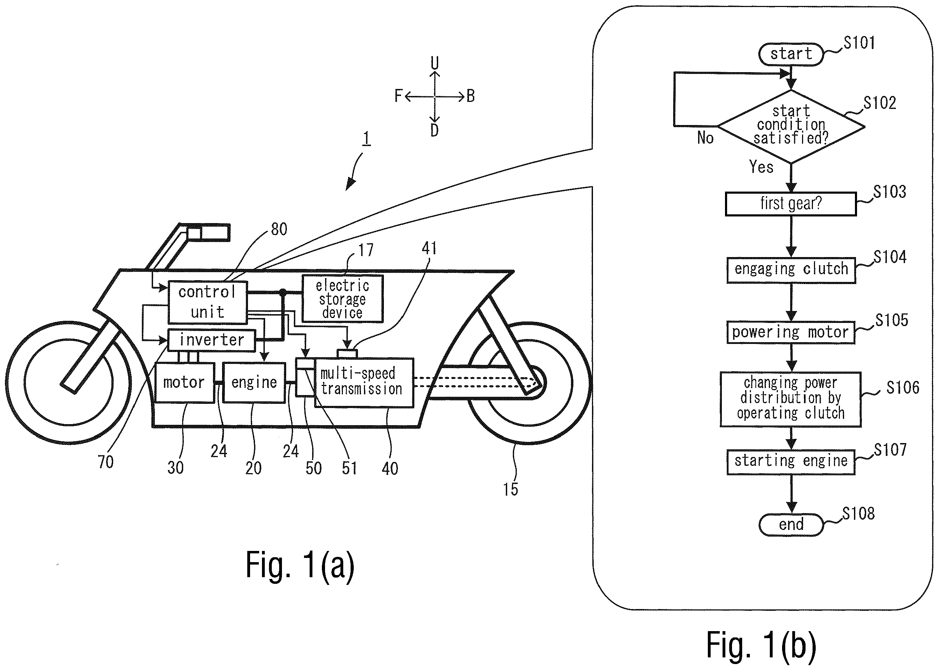

FIG. 1 is an illustration diagram of a leaning vehicle according to an embodiment of the present invention. Part (a) of FIG. 1 is a side view of the leaning vehicle 1. Part (b) of FIG. 1 is a flowchart showing a procedure for controlling a start of the leaning vehicle.

In the description and drawings, F denotes the forward direction of the leaning vehicle 1. B denotes the backward direction of the leaning vehicle 1. FB denotes the forward-backward direction of the leaning vehicle 1. U denotes the upward direction of the leaning vehicle 1. D denotes the downward direction of the leaning vehicle 1. UD denotes the upward-downward direction of the leaning vehicle 1. L denotes the leftward direction of the leaning vehicle 1. R denotes the rightward direction of the leaning vehicle 1. LR denotes the leftward-rightward direction of the leaning vehicle 1. LR also denotes the width direction of the leaning vehicle 1. Specifically, the width direction LR of the leaning vehicle 1 includes both the rightward direction R and the leftward direction L of the leaning vehicle 1. These definitions of directions apply to the directions of an engine 20 contained in the leaning vehicle 1.

The leaning vehicle 1 shown in FIG. 1 includes a permanent-magnet-type electric motor 30, and a rear wheel working as a drive wheel 15, in addition to the engine 20. The leaning vehicle 1 further includes an electric storage device 17.

The engine 20 includes a crankshaft 24. The engine 20 generates power by gas combustion and outputs the power as a torque at the crankshaft 24 and a rotation speed of the crankshaft 24. The engine 20 has a high-load period and a low-load period during four strokes. The high-load period is a period in which the load for rotation of the crankshaft 24 is high. The low-load period is a region in which the load for rotation of the crankshaft 24 is lower than the load in the high-load period. In this embodiment, the engine 20 is, for example, a single-cylinder engine.

The permanent-magnet-type electric motor 30 is connected to the crankshaft 24 in such a manner that the permanent-magnet-type electric motor 30 and the crankshaft 24 rotate at a fixed speed ratio to each other. When the permanent-magnet-type electric motor 30 is supplied with electric power from the electric storage device 17, the permanent-magnet-type electric motor 30 drives the crankshaft 24. When the leaning vehicle 1 starts moving from a standstill, the permanent-magnet- type electric motor 30 drives the drive wheel 15 and thereby starts the leaning vehicle 1.

The permanent-magnet-type electric motor 30 drives the crankshaft 24 also to start the engine 20, and thus, the permanent-magnet-type electric motor 30 also functions as a starter motor for starting the engine 20. Moreover, while the engine 20 is operating for combustion, the permanent-magnet-type electric motor 30 is driven by the crankshaft 24 and generates electric power, and thus, the permanent-magnet-type electric motor 30 also functions as a power generator. In the leaning vehicle 1, the permanent-magnet-type electric motor 30, which functions as a starter motor and a power generator, is provided, which makes it possible to eliminate the need to provide, for example, a starter motor for exclusive use in addition to a power generator.

The drive wheel 15 receives power outputted from at least either the engine 20 or the permanent-magnet-type electric motor 30, and drives the leaning vehicle 1.

The leaning vehicle 1 includes a multi-speed transmission 40 and a shift motor 41. The leaning vehicle 1 additionally includes a clutch 50 and a clutch motor 51.

The multi-speed transmission 40 is located on the power transmission route, between the permanent-magnet-type electric motor 30 or the engine 20 to the drive wheel 15. The multi-speed transmission 40 changes the speed ratio between the engine 20 and the drive wheel 15 in a step-by-step manner. The multi-speed transmission 40 is switchable among a neutral state and a plurality of non-neutral states.

The shift motor 41 drives the multi-speed transmission 40.

The clutch 50 is located on the power transmission route, between the engine 20 and the multi-speed transmission 40. The clutch motor 51 drives the clutch 50. The clutch 50 distributes the output power of the permanent-magnet-type electric motor 30 to the engine 20 and the drive wheel 15 and changes the distribution ratio of the output power of the permanent-magnet-type electric motor 30 between the engine 20 and the drive wheel 15. There is no torque converter on the power transmission route, between the engine 20 and the drive wheel 15.

The leaning vehicle 1 includes a control unit 80 and an inverter 70. The inverter 70 controls the electric current flowing between the electric storage device 17 and the permanent-magnet-type electric motor 30. The control unit 80 controls the combustion in the engine 20 and thereby controls the rotative power outputted from the engine 20. The control unit 80 controls the inverter 70 to control the permanent-magnet-type electric motor 30. The control unit 80 controls the shift motor 41 to shift gears in the multi-speed transmission 40. The control unit 80 controls the clutch motor 51 to operate the clutch 50. When the leaning vehicle 1 is to be started, the control unit 80 carries out start control by controlling the permanent-magnet-type electric motor 30 and the clutch motor 51 to cause the permanent-magnet-type electric motor 30 to drive the leaning vehicle 1.

When a start condition is to be satisfied in the leaning vehicle 1 (step S108), the control unit 80 causes the clutch 50 to distribute the output power of the permanent-magnet-type electric motor 30 to at least the drive wheel 15 and thereby start the leaning vehicle 1 (step S104). Thus, when the start conditions are to be satisfied in the leaning vehicle 1 at a standstill, the control unit 80 causes the clutch 50 to distribute the output power of the permanent-magnet-type electric motor 30 to at least the drive wheel 15. After the drive wheel 15 starts to be rotated, the control unit 80 causes the clutch 50 to decrease the distribution ratio of the output power of the permanent-magnet-type electric motor 30 to the drive wheel 15 and thereby increase the distribution ratio of the output power of the permanent-magnet-type electric motor 30 to the engine 20 (step S106). Thus, by this control of the control unit 80, the clutch 50 is operated to increase the distribution ratio of the output power of the permanent-magnet-type electric motor 30 to the engine 20 (step S106), and thereby the engine 20 is started (S107). Accordingly, when the distribution ratio of the output power of the permanent-magnet-type electric motor 30 to the engine 20 is increased, combustion in the engine 20 is started (step S107).

While controlling the clutch motor 51 to cause the clutch 50 to distribute the output power of the permanent-magnet-type electric motor 30 to the drive wheel (step S104), the control unit 80 starts moving the leaning vehicle 1 (step S105). The transmission of the output power of the permanent-magnet-type electric motor 30 to the drive wheel 15 allows the leaning vehicle 1 to start moving. After the start of the leaning vehicle 1, the control unit 80 causes the clutch 50 to decrease the distribution ratio of the output power of the permanent-magnet-type electric motor 30 to the drive wheel 15 and thereby increase the distribution ratio of the output power of the permanent-magnet-type electric motor 30 to the engine 20 (step S106). With the increase in the distribution ratio of the output power of the permanent-magnet-type electric motor 30 to the engine 20, the power to drive the engine 20 is increased, and thereby, the engine 20 of the leaning vehicle 1 is started (step S107). Thus, according to the present invention, the permanent-magnet-type electric motor 30 starts moving the leaning vehicle 1, and after the start of the leaning vehicle 1, the output power of the permanent-magnet-type electric motor 30 is used to allow the engine 20 to start. In this way, the leaning vehicle 1 can be started more smoothly.

### [Details of Parts]

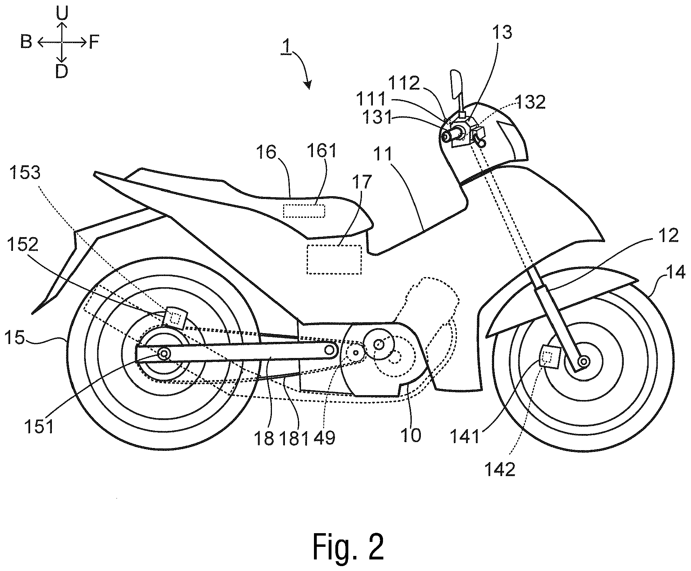

An example of the leaning vehicle 1 according to the embodiment of the present invention will be described in more detail. FIG. 2 is an enlarged side view of an example of the leaning vehicle 1 shown in FIG. 1. The leaning vehicle 1 is specifically a motorcycle. The leaning vehicle 1 includes an engine unit 10, a vehicle body 11, a front fork 12, a handlebar 13, a front wheel 14, a drive wheel 15, a seat 16, an electric storage device 17, and a rear arm 18.

The front fork 12 is supported by the vehicle body 11 in such a manner as to be freely rotatable. The handlebar 13 functions as a steering handle. The handlebar 13 is fixed on the upper end of the front fork 12. Hence, the handlebar 13 is supported by the vehicle body 11 via the front fork 12 in such a manner as to be freely rotatable. An acceleration grip 131 is located in the right part of the handlebar 13. The acceleration grip 131 is an acceleration operator that the driver of the leaning vehicle 1 operates to accelerate the leaning vehicle 1. An acceleration sensor 132 is attached to the acceleration grip 13. The acceleration sensor 132 detects the amount of the driver's operation of the acceleration grip 131. The acceleration sensor 132 is, for example, a potentiometer attached to the acceleration grip 131. The acceleration sensor 132 outputs a signal in accordance with the amount of the driver's operation of the acceleration grip 131. The front wheel 14 is supported by the front fork 12 in such a manner as to be freely rotatable. A front-wheel brake 141 and a front-wheel brake sensor 142 are attached to the front wheel 14. The front-wheel brake sensor 142 detects whether the front-wheel brake 141 is operated or not. The rear arm 18 is supported by the vehicle body 11 in such a manner as to be freely swingable. The drive wheel 15 is supported by the rear arm 18 in such a manner as to be freely rotatable. A vehicle speed sensor 151 is attached to the rear arm 18. The vehicle speed sensor 151 detects the moving speed of the leaning vehicle 1. A rear-wheel brake 152 and a rear-wheel brake sensor 153 are attached to the drive wheel 15. The rear-wheel brake sensor 153 detects whether the rear-wheel brake 152 is operated or not.

The engine unit 10 is held by the vehicle body 11. More specifically, at least part of the engine unit 10 is fixed to a frame (not shown) of the vehicle body 11. The engine unit 10 supplies power from its output part 49 to the drive wheel 15. The output part 49 is a sprocket wound with a chain 181. The output part 49 is located outside the casing of the engine unit 10. Actually, the output part 49 is protected by a cover (not shown) fixed to the vehicle body 11. However, the output part 49 is drawn by dotted line so that the position of the output part 49 in the engine unit 10 will be clear. The power of the engine unit 10 is transmitted to the drive wheel 15 via the sprocket, which works as an output part 49, and the chain 181. The seat 16 is a saddle type and is located in the upper part of the vehicle body 11. The driver of the leaning vehicle 1 straddles and sits on the seat 16, and the driver puts his/her feet on footrests while driving the leaning vehicle 1. The seat 16 has an occupant sensor 161 inside. When a driver sits on the seat to drive the leaning vehicle 1, the occupant sensor 161 sends an occupant signal indicating that a driver is sitting on the seat to the control unit 80 (see FIG. 1). The electric storage device 17 is located inside the vehicle body 11 (see FIG. 1). The electric storage device 17 stores electric power. A key cylinder 111 is located in the vehicle body 11. The driver can insert a key 112 in the key cylinder 111 and rotate the key 112 to set the key cylinder to ON position or OFF position. When the key cylinder 111 is turned on, the control unit 80 is supplied with electric power.

### [Engine Unit]

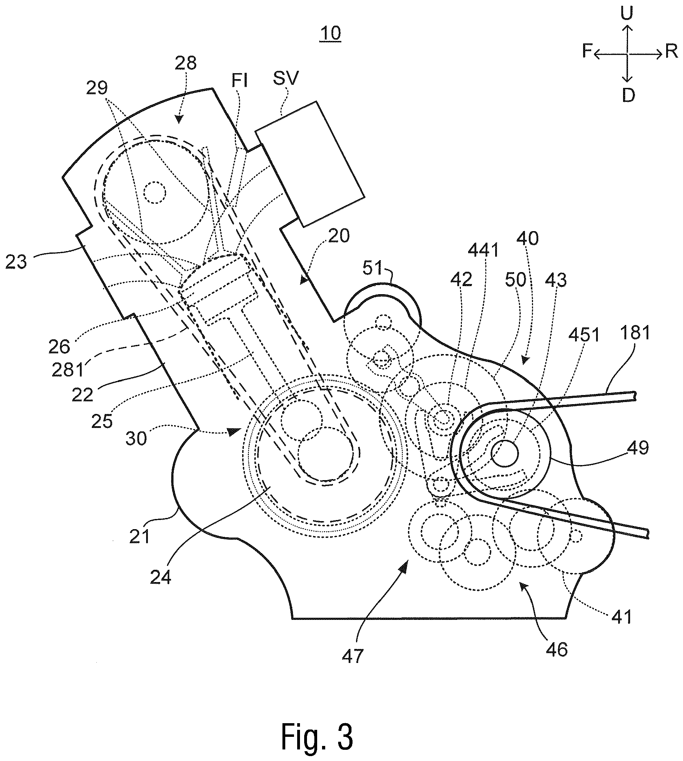

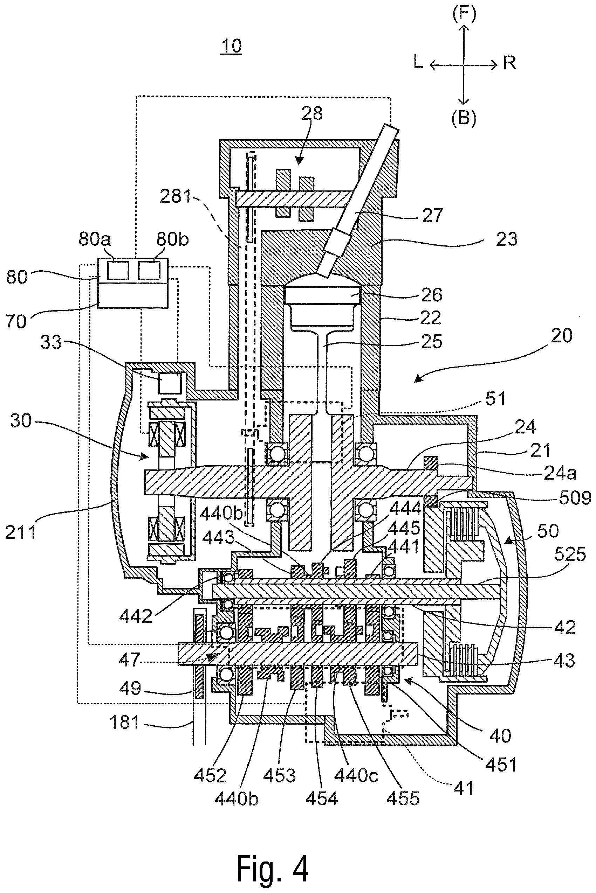

FIG. 3 is an enlarged left side view of the engine unit 10 shown in FIG. 2. FIG. 4 is an enlarged sectional view of the engine unit 10 shown in FIG. 2. The engine unit 10 includes an engine 20, a permanent-magnet-type electric motor 30, a multi-speed transmission 40, a clutch 50, an inverter 70, and a control unit 80.

The engine 20 includes a crankshaft 24, a connecting rod 25, a piston 26, an ignition plug 27 (see FIG. 4), a valve actuation mechanism 28, and a valve 29 (see FIG. 3). The engine 20 further includes a crankcase 21, a cylinder 22, and a cylinder head 23.

The crankcase 21, the cylinder 22 and the cylinder head 23 form a casing of the engine 20. The piston 26 is located in the cylinder 22 and is able to make a reciprocal motion in the cylinder 22. The crankcase 21 is connected to the cylinder 22.

The crankshaft 24 is located in and supported by the crankcase 21 in such a manner as to be rotatable. The piston 26 and the crankshaft 24 are connected to each other via the connecting rod 25. The valve 29 and the valve actuation mechanism 28 are located in the cylinder head 23.

The crankshaft 24, the multi-speed transmission 40, and the permanent-magnet-type electric motor 30 are positioned in the crankcase 21. The power outputted from the crankshaft 24 is transmitted to the valve actuation mechanism 28 via a cam chain 281. The valve actuation mechanism 28 actuates the valve 29 in synchronization with the rotation of the crankshaft 24 and the reciprocal motion of the piston 26.

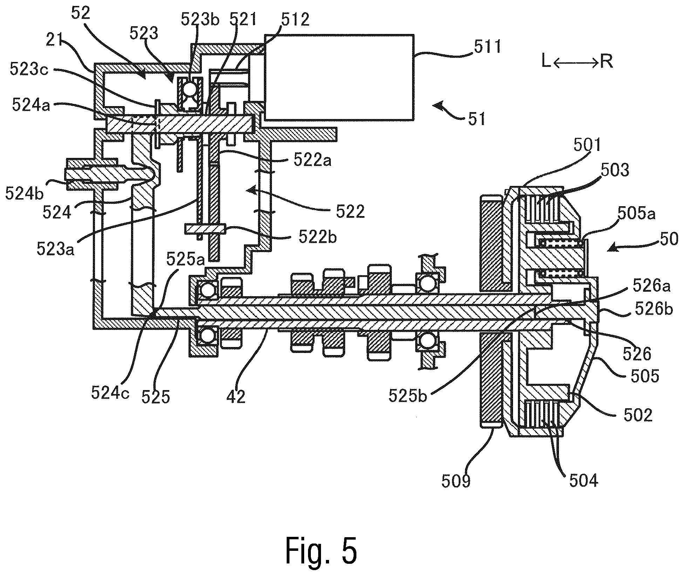

A gear 24a is attached to the right part of the crankshaft 24 in such a manner as to be concentric with the crankshaft 24 and to rotate together with the crankshaft 24. The gear 24a engages with a clutch drive gear 509. The clutch drive gear 509 is attached to an input shaft 42 in such a manner as to be concentric with the input shaft 42 and to be rotatable around the input shaft 42 (see FIG. 5).

One combustion cycle of the engine 20 includes an intake step, a compression step, an expansion step, and an exhaustion step. At the intake step, a gas mixture of fuel and air is supplied into a combustion chamber defined by the cylinder 22, the cylinder head 23 and the piston 26 as shown in FIGS. 3 and 4. At the compression step, the piston 26 compresses the gas mixture in the combustion chamber. At the expansion step, the gas mixture is fired by the ignition plug 27, and the firing gas mixture pushes the piston 26 back. At the exhaust step, the air after the combustion is exhausted from the combustion chamber as exhaust gas. The reciprocal motion of the piston 26 is converted into rotation of the crankshaft 24. The energy generated by the combustion of the fuel in the engine 20 is output to the multi-speed transmission 40 as output power of the crankshaft 24.

The multi-speed transmission 40 changes the rotation speed of the crankshaft 24 in accordance with the gear position. The multi-speed transmission 40 is a transmission with a plurality of gear positions. The multi-speed transmission 40 includes a clutch 50, a clutch motor 51, and a clutch engaging/disengaging mechanism 52. The multi-speed transmission 40 further includes an input shaft 42, an output shaft 43, drive gears 441 to 445, driven gears 451 to 455, sliders 440a to 440c, and an output part 49. The multi-speed transmission 40 furthermore includes a shift motor 41, a power transmission mechanism 46, a gear setting mechanism 47, and a phase (or position) maintaining mechanism (not shown). The multi-speed transmission 40 converts the rotation speed of the crankshaft 24 into a speed ratio selected from a plurality of speed ratios and provides an output.

### [Clutch]

FIG. 5 is a sectional view of the clutch 50 of the engine unit 10 shown in FIG. 1 and a mechanism for driving the clutch 50. The clutch 50 is located on the power transmission route, between the engine 20 and the drive wheel 15 (see FIGS. 3 and 4). The clutch 50 is capable of being between a state of disconnecting the power transmission route and a state of connecting the power transmission route. Thus, the clutch 50 connects and disconnects the power transmission route between the crankshaft 24 and the input shaft 42. In this way, the clutch 50 changes the distribution ratio of the power of the permanent-magnet-type electric motor 30 to the engine 20 and the drive wheel 15.

More specifically, the control unit 80 controls the clutch motor 51 such that the clutch 50 disconnects the power transmission route between the crankshaft 24 and the input shaft 42 via the clutch engaging/disengaging mechanism 52. The clutch 50 is on the right R of the cylinder 22 of the engine 20 with respect to the vehicle width direction LR (see FIG. 4).

For example, the control unit 80 controls the clutch motor 51 such that the clutch 50 is capable of being toward the state of connecting the power transmission route. When the clutch 50 becomes the state of connecting the power transmission route, the distribution ratio of the output power of the permanent-magnet-type electric motor 30 to the drive wheel 15 increases. At the same time, the distribution ratio of the output power of the permanent-magnet-type electric motor 30 to the engine 20 decreases by the same amount. For example, the control unit 80 controls the clutch motor 51 such that the clutch 50 becomes the state of disconnecting the power transmission route. When the clutch 50 becomes the state of disconnecting the power transmission route, the distribution ratio of the output power of the permanent-magnet-type electric motor 30 to the drive wheel 15 decreases. At the same time, the distribution ratio of the output power of the permanent-magnet-type electric motor 30 to the engine 20 increases by the same amount.

In a start operation of the leaning vehicle according to the present invention, the drive source for the start from the permanent-magnet-type electric motor 30 to the engine 20 is changed smoothly. Specifically, when the leaning vehicle 1 is started, the drive source is changed from the permanent-magnet-type electric motor 30 to the engine 20 smoothly. Thus, the leaning vehicle 1 starts moving more smoothly.

The clutch 50 is a wet multiplate clutch. The clutch 50 includes a clutch housing 501, a clutch boss 502, a plurality of friction plates 503, a plurality of clutch plates 504, and a pressure plate 505. The clutch 50 includes a clutch drive gear 509. When the clutch 50 is engaged, the clutch drive gear 509 transmits the power supplied from the crankshaft 24 to the input shaft 42 (see FIGS. 3 and 4). The clutch housing 501 is configured to rotate together with the clutch drive gear 509. Accordingly, the clutch housing 501 rotates together with the crankshaft 24.

The clutch housing 501 is shaped like a cylinder with a bottom. The clutch housing 501 is positioned in such a manner as to be concentric with the input shaft 42 and to be rotatable relative to the input shaft 42. On the inner circumferential surface of the clutch housing 501, the plurality of friction plates 503 are arranged in such a manner that each of the friction plates 503 projects inwardly along the radial direction of the clutch housing 501. The plurality of friction plates 503 are arranged at intervals in the axial direction of the input shaft 42.

The clutch boss 502 is cylindrical. The clutch boss 502 is located more inward than the clutch housing 501 with respect to the radial direction of the input shaft 42. The clutch boss 502 rotates together with the input shaft 42. On the outer circumferential surface of the clutch boss 502, the plurality of clutch plates 504 are arranged in such a manner that each of the clutch plates 504 projects outwardly along the radial direction of the clutch boss 502. The plurality of clutch plates 504 are arranged at intervals in the axial direction of the input shaft 42. The friction plates 503 and the clutch plates 504 are arranged alternately in the axial direction of the input shaft 42.

The pressure plate 505 is spaced from the clutch boss 502 in the axial direction of the input shaft 42. The pressure plate 505 is pushed toward the clutch boss 502 by a clutch spring 505a. When the pressure plate 505 is subjected to the force of the clutch spring 505a and presses the friction plates 503 and the clutch plates 504 against each other, the clutch 50 is engaged. On the other hand, when the pressure plate 505 acts contrary to the force of the clutch spring 505a and separates the friction plates 503 and the clutch plates 504 from each other, the clutch 50 is disengaged. Power outputted from the clutch motor 51 is transmitted to the pressure plate 505 via the clutch engaging/disengaging mechanism 52, and thereby, the motion of the pressure plate 505 is controlled.

The clutch motor 51 includes a body 511 and a shaft 512. The shaft 512 projects from the body 511 and is rotatable. The shaft 512 outputs power as its rotation. The power outputted from the clutch motor 51 is used as a force that engages or disengages the clutch 50. The clutch motor 51 is configured such that the rotation direction of the shaft 512 for engagement of the clutch 50 is opposite to the rotation direction of the shaft 512 for disengagement of the clutch 50. The clutch motor 51 is supported by the crankcase 21. The shaft 512 is parallel to the crankshaft 24.

The clutch engaging/disengaging mechanism 52 is configured to transmit the output power of the clutch motor 51 to the clutch 50. The clutch engaging/disengaging mechanism 52 includes a support shaft 521, a speed reduction mechanism 522, a ball cam mechanism 523, a seesaw mechanism 524, a pushrod 525, and a connecting member 526. The support shaft 521 is supported by the crankcase 21 in such a manner as to be parallel to the shaft 512. The speed reduction mechanism 522 includes a plurality of gears, and the speed reduction mechanism 522 is supported by the support shaft 521 in such a manner that its input part 522a is in engagement with the shaft 512 of the clutch motor 51 and is rotatable around the support shaft 521. The speed reduction mechanism 522 reduces the speed of the rotatory power transmitted from the input part 522a in a reduction part 522b and transmits the power to an input part 523a of the ball cam mechanism 523. Thereby, the input part 523a of the ball cam mechanism 523 rotates around the support shaft 521. By the rotation of the input part 523a, the output part 523c of the ball cam mechanism 523 moves on the support shaft 521 away from the input part 523a of the ball cam 523 (leftward in FIG. 5) while holding a ball 523b of the ball cam mechanism 523. While moving on the support shaft 521, the output part 523c of the ball cam mechanism 523 pushes an input-side end 524a of the seesaw mechanism 524 leftward in FIG. 5 along the axis of the support shaft 521. The seesaw mechanism 524 is supported by a support pin 524b in such a manner as to be swingable in the vehicle width direction LR on the tip of the support pin 524b. When the input-side end 524a of the seesaw mechanism 524 is pushed leftward in FIG. 5 by the output part 523c of the ball cam mechanism 523, the seesaw mechanism 524 swings, and an output-side end 524c of the seesaw mechanism 524 pushes the pushrod 525 rightward in FIG. 5.

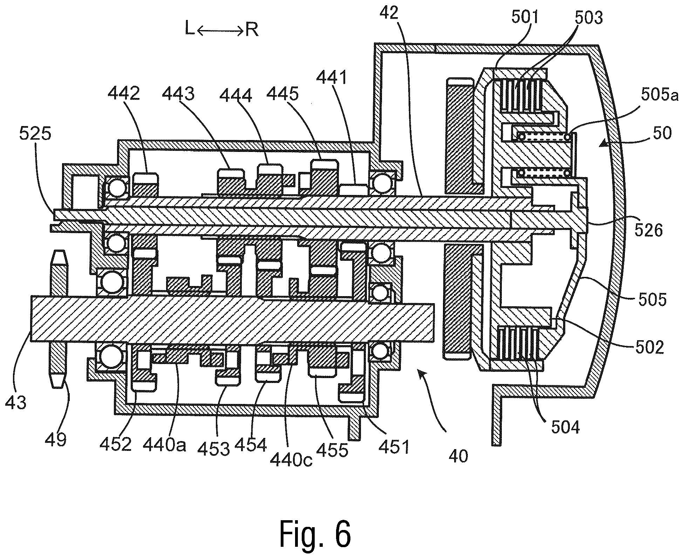

As shown in FIG. 6, the pushrod 525 is located in the space extending inside the input shaft 42 in the vehicle width direction LR in such a manner as to be capable of reciprocating in the vehicle width direction. A first end portion 525a of the pushrod 525 projects in the vehicle width direction LR from the input shaft 42. A second end portion 525b of the pushrod 525 is opposed to a first end portion 526a of the connecting member 526. The connecting member 526 is a rod-like member of which the longitudinal direction is parallel to the vehicle width direction. The first end portion 526a of the connecting member 526 is located in the space extending in the input shaft 42 in the vehicle width direction in such a manner as to be slidable in the vehicle width direction. The right end portion 526b of the connecting member 526 is fitted in a hole formed in the center of the pressure plate 505 with respect to the radial direction, and thereby supported by the pressure plate 505. The connecting member 526 and the pressure plate 505 are rotatable relative to each other.

When the pushrod 525 is pushed by the swinging seesaw mechanism 524, the power is transmitted to the pressure plate 505 via the pushrod 525 and the connecting member 526, whereby the pressure plate 505 is pushed. Then, the pressure plate 505 moves away from the clutch boss 502 (rightward R in FIG. 5) against the force of the clutch spring 505a. Thereby, the pressure plate 505 loses its power to press the friction plates 503 and the clutch plates 504 against each other. As a result, the clutch 50 is disengaged. While the clutch 50 is disengaged, the power outputted from the crankshaft 24 is not transmitted to the input shaft 42. On the other hand, when the seesaw mechanism 524 swings back and releases the pushrod 525 from the pressure, the pushrod 525 is moved toward the seesaw mechanism 524 by the force of the clutch spring 505a. Accordingly, the pressure plate 505 moves toward the clutch boss 502. Then, the pressure plate 505 presses the friction plates 503 and the clutch plates 504 against each other. As a result, the clutch 50 is engaged. While the clutch 50 is engaged, the power outputted from the crankshaft 24 is transmitted to the input shaft 42 via the clutch 50.

### [Multi-Speed transmission]

FIG. 6 is a sectional view of the multi-speed transmission 40 of the engine unit 10 shown in FIG. 1. The multi-speed transmission 40 is a dog transmission. The output shaft 43 is rotatable on an axis parallel to the input shaft 42. The plurality of drive gears 441 to 445 are attached to the input shaft 42 and are configured to always rotate together with the input shaft 42. Each of the drive gears 441 to 445 corresponds to each speed. The first drive gear 441 and the second drive gear 442 are integral with the input shaft 42. The third drive gear 443 and the fourth drive gear 444 are arranged along the input shaft 24 and formed as a one-piece body, and thus, the third and fourth drive gears 443 and 444 form a slider 440b. The slider 440b is attached to the input shaft 42 by spline connection, and the slider 440b is movable in a direction parallel to the input shaft 42 (in Z direction). The fifth drive gear 445 is attached to the input shaft 42 in such a manner as to be rotatable relative to the input shaft 42.

The plurality of driven gears 451 to 455 are attached to the output shaft 43. The first to fourth driven gears 451 to 454 are attached to the output shaft 43 in such a manner as to be rotatable relative to the output shaft 43. A slider 440a is located between the second driven gear 452 and the third driven gear 453. A slider 440c, which includes the fifth driven gear 455, is located between the fourth driven gear 454 and the first driven gear 451. The sliders 440a and 440c are attached to the output shaft 443 by spline connection, and the sliders 440a and 440c are movable in a direction parallel to the output shaft 43. The plurality of driven gears 451 to 455 are configured to be engageable with the drive gears 441 to 445. At least one of the plurality of driven gears 451 to 455 is in engagement with any one of the drive gears 441 to 445 at any time. The output shaft 43 works with the output part 49 of the engine unit 10. More specifically, the output shaft 43 is fixed to the output part 49. Power transmitted to the output shaft 43 is outputted from the output part 49.

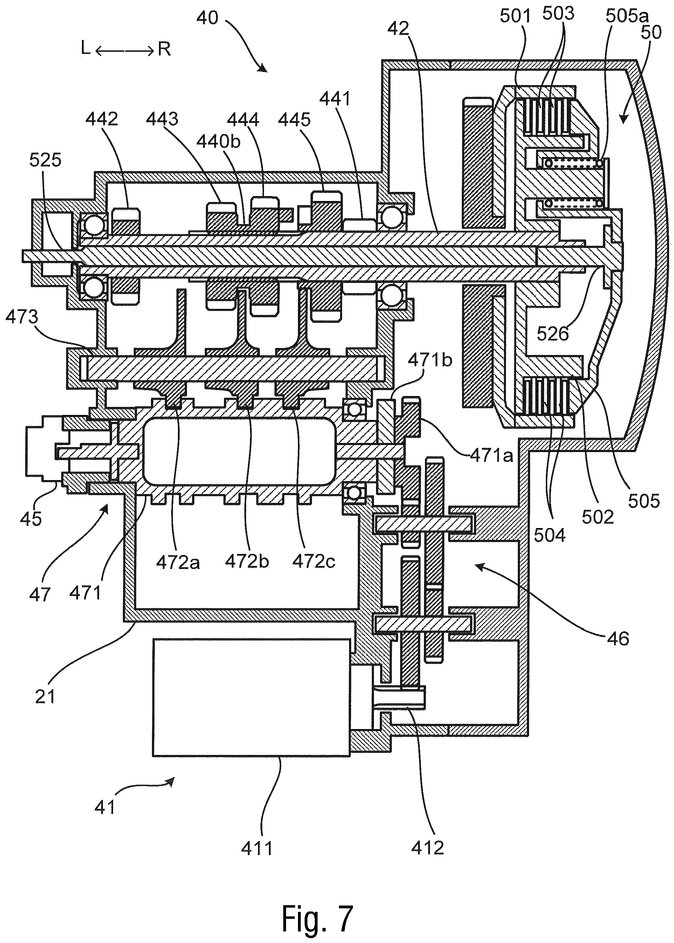

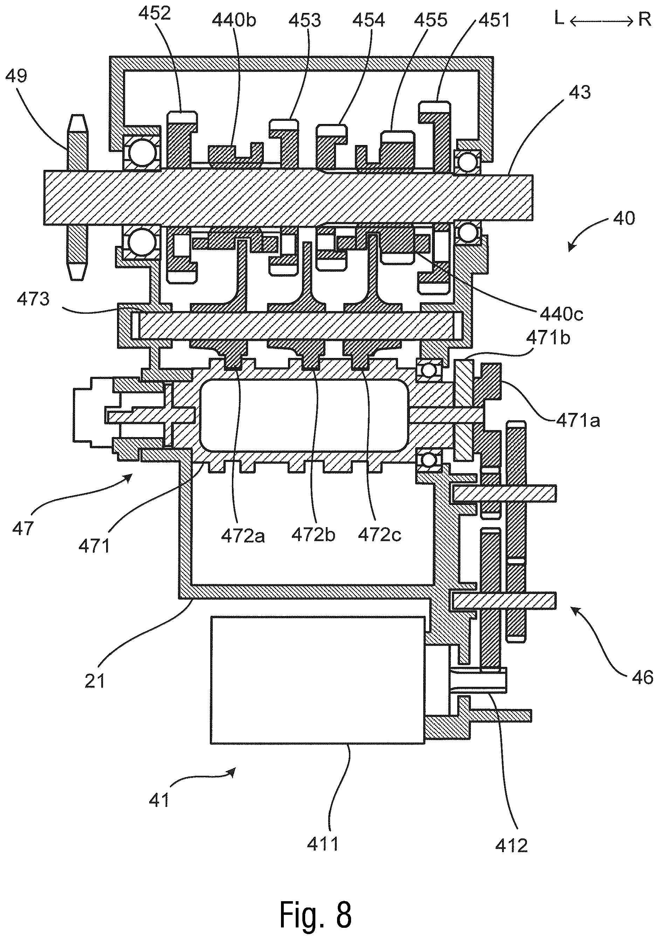

FIGS. 7 and 8 are sectional views of a mechanism for actuating the multi-speed transmission 40 of the engine unit 10 shown in FIG. 1. FIG. 7 is a sectional view including the axis of the input shaft 42 of the multi-speed transmission 40 and the axis of a shift cam (471) of the gear setting mechanism (47). FIG. 8 is a sectional view including the axis of the input shaft 43 of the multi-speed transmission 40 and the axis of the shift cam (471) of the gear setting mechanism (47). The shift motor 41 includes a body 411 and a shaft 412. The body 411 is supported by the crankcase 21. The shaft 412 projects from the body 411 and is rotatable. The shaft 412 engages with the power transmission mechanism 46. The power transmission mechanism 46 transmits power outputted from the shift motor 41 to the gear setting mechanism 47. The gear setting mechanism 47 is configured to set an effective transmission route mechanically and selectively from the input shaft 42 to the output shaft 43 by causing an appropriate one of the drive gears 441 to 445 to engage with an appropriate one of the driven gears 451 to 455. The gear setting mechanism 47 includes a shift cam 471, shift forks 472a to 472c, and a fork guide shaft 473. The power transmitted through the power transmission mechanism 46 is supplied to the shift cam 471 via a gear 471a attached to an end of the shift cam 471. The shift forks 472a to 472c are fitted in cam grooves of the shift cam 471. The shift fork 472b is also fitted in a groove formed in the slider 440b attached to the input shaft 42. The shift forks 472a and 472c are also fitted in grooves respectively formed in the sliders 440a and 440c of the output shaft 43. The shift cam 471 is movable on the fork guide shaft 473 in the axial direction. The shaft 412 of the shift motor 41, the rotation axis of the shift cam 471, the fork guide shaft 473, the input shaft 42 and the output shaft 43 are perfectly or substantially parallel to one another. These shafts and axes are parallel to, for example, the vehicle width direction LR.

The control unit 80 drives the shift motor 41 for gear shifting. The control unit 80 causes the shaft 412 of the shift motor 41 to rotate. The shift motor 41 is configured to rotate the shaft 412 in a particular direction to shift up a gear and to rotate the shaft 412 in the opposite direction to shift down a gear. Power outputted by rotation of the shaft 412 is reduced in speed by the power transmission mechanism 46 and transmitted to the shift cam 471 via the gear 471a attached to an end of the shift cam 471. When the shift cam 471 is driven to rotate by the shift motor 41, the shift forks 472a to 472c are guided into cam grooves formed in the shift cam 471, and the sliders 440a to 440c are moved in the axial direction. The drive gear 445, the driven gears 451 to 455 and the sliders 440a to 440c each have a dog. For example, when the slider 440a moves in the axial direction, the dog of the drive gear 452 or 453 and the dog of the slider 440a come into engagement with each other (see FIG. 8). When the slider 440b moves in the axial direction, the dog of the drive gear 445 and the dog of the slider 440b come into engagement with each other (see FIG. 7). When the slider 440c moves in the axial direction, the dog of the driven gear 451 or 454 and the dog of the slider 440c come into engagement with each other. Thereby, power transmission via a pair of gears comes into operation. In this way, the multi-speed transmission 40 changes the speed ratio in accordance with the operation of the shift motor 41. The rotation speed of the crankshaft 24 is converted at a speed ratio in accordance with the operation of the shift motor 41, and the power is outputted from the output part 49.

The shift cam 471 includes an index cam 471b shaped like a star. The phase maintaining mechanism (not shown) is connected to the index cam 471b. The phase maintaining mechanism is a mechanism for maintaining the phase of the index cam 471b. The phase maintaining mechanism keeps the index cam 471b in a phase, which is variable by a fixed-angle rotation of the index cam 741b, that is, at a gear position as described above unless gears are shifted. Since the index cam 471b is kept in a phase, the shift cam 471 itself is kept in a phase.

### [Permanent-Magnet-Type Electric Motor]

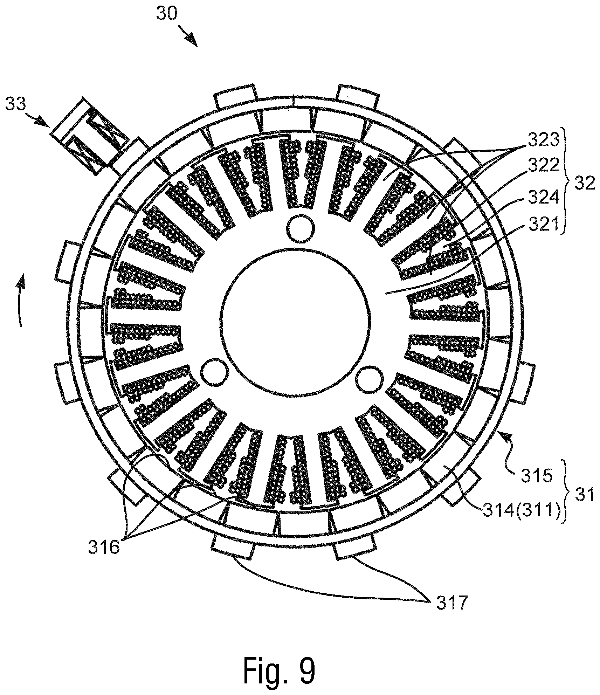

FIG. 9 is a sectional view of the permanent-magnet-type electric motor 30 shown in FIGS. 3 and 4 in a plane perpendicular to the rotation axis of the permanent-magnet-type electric motor 30. With reference to FIG. 9, the permanent-magnet-type electric motor 30 will be described. The permanent-magnet-type electric motor 30 is attached to the left end portion of the crankshaft 24 (see FIG. 4). The permanent-magnet-type electric motor 30 is a permanent-magnet-type three-phase brushless motor. The permanent-magnet-type electric motor 30 functions as a permanent-magnet-type three-phase brushless generator.

The permanent-magnet-type electric motor 30 includes a rotor 31 and a stator 32. The permanent-magnet-type electric motor 30 is a radial gap type. The permanent-magnet-type electric motor 30 is also an outer rotor type. In other words, the rotor 31 is an outer rotor, and the stator 32 is an inner stator.

The rotor 31 includes a rotor body 315. The rotor body 315 is fixed to the crankshaft 24. The rotor 31 is not wound with a wire to be supplied with electricity. The rotor 31 is shaped like a cylinder with a bottom, and the rotor 31 is positioned in such a manner as to be open leftward L. In other words, the back yoke of the cylinder is positioned to the left of the disk-like bottom wall with respect to the vehicle width direction LR (see FIG. 4).

The rotor 31 includes a permanent magnetic section 311. The permanent magnetic section 311 is opposed to the stator 32 with a space. The rotor 31 includes a plurality of magnetic pole parts 314. The plurality of the magnetic pole parts 314 are formed by the permanent magnetic section 311. The plurality of magnetic pole parts 314 are located on the inner circumference of the rotor body 315. The permanent magnetic section 311 is formed of a plurality of permanent magnets. However, the permanent magnetic section 311 may be formed of one permanent magnet that is magnetized to have a plurality of pairs of magnetic poles.

The plurality of magnetic pole parts 314 are arranged in such a manner that N pole and S pole alternate in the circumferential direction of the permanent-magnet-type electric motor 30. In this embodiment, the number of magnetic poles of the rotor 31, which is opposed to the stator 32, is 24. The number of magnetic poles of the rotor 31 means the number of magnetic poles opposed to the stator 32. There is no magnetic body between the magnetic pole parts 314 and the stator 32. The magnetic pole parts 314 are located outward from the stator 32 in the radial direction of the permanent-magnet-type electric motor 30. The back yoke is located outward from the magnetic pole parts 314 in the radial direction.

The stator 32 includes a stator core 321 and a plurality of stator wires 322. The stator core 321 has a plurality of teeth 323 that are arranged at intervals in the circumferential direction. Each of the plurality of teeth 323 extends outward in the radial direction from the stator core 321. In this embodiment, a total of 18 teeth are arranged at intervals in the circumferential direction. In other words, the stator core 321 has 18 slots 324 formed at intervals in the circumferential direction. The teeth 323 are arranged in the circumferential direction at equal intervals.

The number of the magnetic pole parts 314 of the rotor 31 is larger than the number of the teeth 323. Thus, the permanent-magnet-type electric motor 30 includes a larger number of magnetic pole pars 314 than the number of the teeth 323. The number of the magnetic pole parts is 4/3 times the number of the slots.

Each of the teeth 323 is wound with a stator wire 322. Specifically, stator wires 322 in different phases are wound in such a manner to pass through the slots 324. FIG. 9 shows a state in which the stator wires 322 are in the slots 324. Each of the stator wires 322 in different phases is in U phase, V phase or W phase. The stator wires 322 are arranged, for example, in such a manner that a wire of U phase, a wire of V phase and a wire of W phase are arranged in this order repeatedly.

A rotor position detector 33 is provided in the engine unit 10. The rotor position detector 33 is a device that detects the position of the rotor 31. The rotor position detector 33 includes, for example, a pick-up coil and a magnet. When the rotor position detector 33 is located in the housing space of the permanent-magnet-type electric motor 30, the rotor position detector 33 is, for example, fixed to a start generator cover 211 of the crankcase 21 (see FIG. 4). When the rotor position detector 33 is located in the housing space of the permanent-magnet-type electric motor 30, the rotor position detector 33 may be, for example, fixed to the stator 32. On the outer surface of the rotor 31, there are a plurality of detectable parts 317 that are used for detection of the rotational position of the rotor 31. The detectable parts 317 are detected by magnetic action. The detectable parts 317 are arranged at intervals circumferentially on the outer surface of the rotor 31. The detectable parts 317 are made of a ferromagnetic material. The rotor position sensor 33 detects the detectable parts 317 magnetically.

The rotator position detector 33 may be, for example, a Hall IC. The rotor position detector 33 detects the magnetic faces 316 of the magnetic parts 314 of the rotor 31. Every time the rotor position detector 33 detects a magnetic face 316, the electric signal outputted therefrom changes. The electric signal is sent from the rotor position detector 33 to the control unit 80. The control unit 80 determines the position of the rotor 31 based on the change of the electric signal outputted from the rotor position detector 33.

The rotor 31 is fixed to the crankshaft 24 not via the power transmission mechanism (not via any belt, any chain, any gear, any speed reducer, any speed increaser, or the like). The rotor 31 rotates at a speed ratio of 1:1 to the crankshaft 24. Specifically, the rotor 31 is connected to the crankshaft 24 in such a manner as to rotate with the crankshaft 24 at the same speed. The rotation axis of the permanent-magnet-type electric motor 30 and the rotation axis of the crankshaft 24 are substantially the same. More specifically, the rotor 31 is fixed to the crankshaft 24. The rotor 31 is connected to the crankshaft 24 directly.

### [Control Unit]

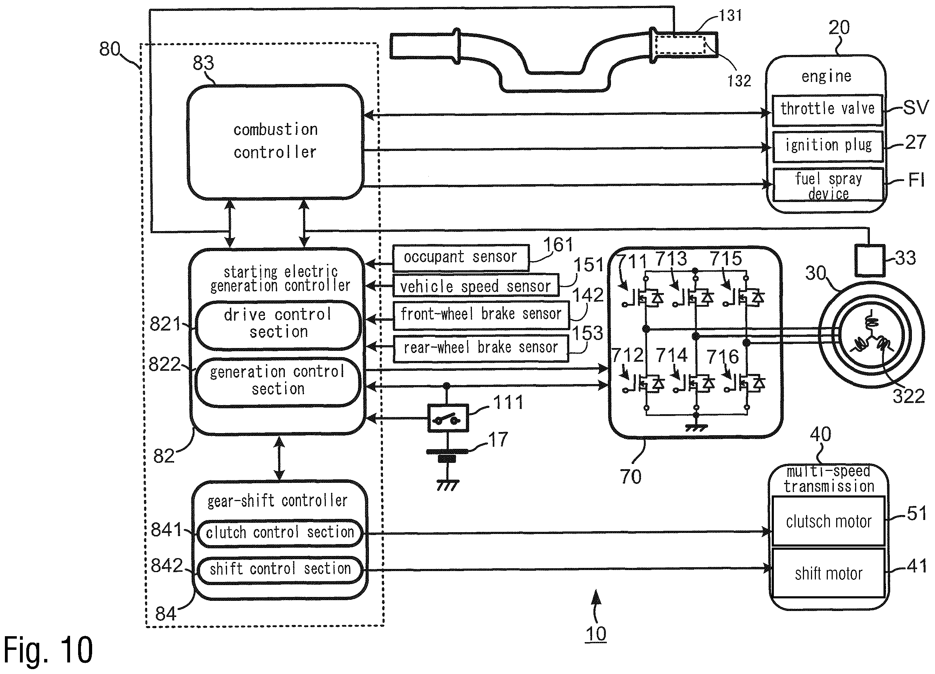

FIG. 10 is a block diagram showing the electrical configuration of the engine unit 10 shown in FIGS. 3 and 4. FIG. 10 additionally shows the electric storage device 17 and the key cylinder 111 that are electrically connected to the engine unit 10. The electric storage device 17 is a battery.

The control unit 80 of the engine unit 10 includes a starting electric generation controller 82, a combustion controller 83, and a gear-shift controller 84. The starting electric generation controller 82 controls the inverter 70. The permanent-magnet-type-electric motor 30 and the electric storage device 17 are connected to the inverter 70. When the permanent-magnet-type-electric motor 30 works as a motor, the electric storage device 17 supplies electric power to the permanent-magnet-type-electric motor 30. When the permanent-magnet-type-electric motor 30 works as an electric generator, the electric storage device 17 is charged with electric power generated by the permanent-magnet-type-electric motor 30. The inverter 70 regulates the electric current flowing between the electric storage device 17 and the permanent-magnet-type-electric motor 30. The inverter 70 includes a plurality of switches 711 to 716. Specifically, the inverter 70 has six switches 711 to 716. The inverter 70 is a three-phase bridge inverter. Each of the switches 711 to 716 includes a switching element. The switching element is, for example, a transistor, and more specifically, an FET (field effect transistor). Each of the switches 711 to 716 is connected to one of the stator wires 322 in one of the plurality of phases. Specifically, the plurality of switches 711 to 716 form half bridges, each of which is formed by a serial connection between two of the switches 711 to 716. The half bridges for different phases are connected to the electric storage device 17 in parallel. In this way, the switches 711 to 716, which form half bridges for different phases, are connected to the stator wires 322 in different phases in a corresponding manner.

The inverter 70 regulates the electric current flowing between the electric storage device 17 and the permanent-magnet-type-electric motor 30. Specifically, the switches 711 to 716 of the inverter 70 switches on and off the electrical connection between the electric storage device 17 and the stator wires 322 in different phases. More specifically, when the permanent-magnet-type-electric motor 30 works as a motor, energization and deenergization of the stator wires 322 in different phases are controlled by turning on and off of the switches 711 to 716. When the permanent-magnet-type-electric motor 30 works as an electric generator, the electrical connection between the respective stator wires 322 and the electric storage device 17 is switched on and off by the inverter 70 turning on and off the switches 711 to 716. By turning on and off the switches 711 to 716 in order, rectification of the three-phase AC outputted from the permanent-magnet-type-electric motor 30 and voltage control are carried out. In this way, the switches 711 to 716 control the electric current outputted from the permanent-magnet-type-electric motor 30 and flowing to the electric storage device 17.

The key cylinder 111 is connected to the control unit 80. The key cylinder 111 switches on and off the power supply to the control unit 80 in accordance with the driver's operation with a key 112. The vehicle speed sensor 151 is connected to the control unit 80. The vehicle speed sensor 151 detects the moving speed of the leaning vehicle 1. The occupant sensor 161 is connected to the control unit 80. The occupant sensor 161 detects a driver of the leaning vehicle 1 sitting on the seat. The acceleration sensor 132 is connected to the control unit 80. The acceleration sensor 132 outputs a signal corresponding to the amount of the rider's operation of the acceleration grip 131. A gear position sensor 45 is connected to the control unit 80. The gear position sensor 45 detects which the gear position of the multi-speed transmission 40 is, neutral or any of a plurality of speeds. The ignition plug 27, a fuel spray device FI and the electric storage device 17 are connected to the control unit 80. The rotor-position detector 33 is connected to the control unit 80. The control unit 80 acquires information on the position of the rotor 31 in the permanent-magnet-type electric motor 30 from the signal sent from the rotor position detector 33. The control unit 80 controls the inverter 70 in accordance with the position of the rotor 31. The front-wheel brake sensor 142 and the rear-wheel brake sensor 153 are connected to the control unit 80. The front-wheel brake sensor 142 and the rear-wheel brake sensor 153 detect the driver of the leaning vehicle 1 applying the brake.

The starting electric generation controller 82 includes a drive control section 821 and a generation control section 822. The drive control section 821 controls the inverter 70 such that the permanent-magnet-type electric motor 30 rotates the crankshaft 24. When the permanent-magnet-type electric motor 30 rotates the crankshaft 24, the engine 20 starts. Moreover, the drive control section 821 controls the inverter 70 such that the permanent-magnet-type electric motor 30 rotates the drive wheel 15 via the crankshaft 24 and the multi-speed transmission 40. When the permanent-magnet-type electric motor 30 rotates the drive wheel 15 via the crankshaft 24 and the multi-speed transmission 40, the leaning vehicle 1 starts moving. The generation control section 822 causes the permanent-magnet-type electric motor 30 to generate electric power. The generation control section 822 controls the inverter 70 such that the permanent-magnet-type electric motor 30 generates electric power. When the permanent-magnet-type electric motor 30 generates electric power, the electric storage device 17 is charged.

The starting electric generation controller 82, which includes a drive control section 821 and a generation control section 822, controls turning on and off the switches 711 to 716 individually and thereby controls the operation of the permanent-magnet-type electric motor 30. The starting electric generation controller 82 determines the position of the rotor 31 of the permanent-magnet-type electric motor 30 based on changes of the electric signal outputted from the rotor position detector 33. The starting electric generation controller 82 controls the switches 711 to 716 in accordance with the position of the rotor 31. The starting electric generation controller 82 controls the rotation of the permanent-magnet-type electric motor 30. The starting electric generation controller 82 turns on and off the switches 711 to 716 not at predetermined times but depending on the position of the rotor 31 detected by the rotor position detector 33. Thus, the starting electric generation controller 82 turns on and off the switches 711 to 716 by carrying out feedback control based on the position of the rotor 31.

The combustion controller 83 controls a throttle valve SV, the ignition plug 27 and the fuel spray device FI in accordance with the driver's operation of the acceleration grip 131 and thereby controls the combustion in the engine 20. The combustion controller 83 controls the throttle valve SV, the ignition plug 27 and the fuel spray device FI and thereby controls the rotation of the engine 20. The combustion controller 83 controls the ignition plug 27 and the fuel spray device FI in accordance with the degree of opening of the throttle valve SV.

The gear-shift controller 84 includes a clutch control section 841 and a shift control section 842. The clutch control section 841 controls the clutch motor 51 for engagement and disengagement of the clutch 50. The shift control section 842 controls the shift motor 41 for gear shifting of the multi-speed transmission 40.

The control unit 80 is a computer including a central processing unit 80a and a storage device 80b (see FIG. 4). The central processing unit 80a carries out computing following a control program. The storage device 80b stores data pertaining to the program and computing. The starting electric generation controller 82, the combustion controller 83 and the gear-shift controller 84 are implemented by a computer (not shown) and a control program (not shown) executed by the computer. Accordingly, operations as described below that are carried out by the starting generation controller 82 (including the drive control section 821 and the generation control section 822), the combustion controller 83 and the gear-shift controller 84 (including the clutch control section 841 and the shift control section 842) are operations carried out by the control unit 80. The starting electric generation controller 82, the combustion controller 83 and the gear-shift controller 84 may be configured, for example, as separate devices that are located separately from one another, or as one device.

### [Start Control]

The control unit 80 functions to control a start of the leaning vehicle 1. When the conditions for a start of the leaning vehicle 1 (which will hereinafter be referred to as start conditions) are satisfied, the control unit 80 starts the leaning vehicle 1.

The control unit 80 controls the clutch motor 51 such that the clutch 50 comes to a state of connecting the power transmission route, whereby the power outputted from the permanent-magnet-type electric motor 30 is delivered to at least the drive wheel 15.

Specifically, when the start conditions are satisfied, the start electric generation controller 82 of the control unit 80 drives the permanent-magnet-type electric motor 30 while the engine 20 is in a stopped state. Specifically, the gear-shift controller 84 of the control unit 80 controls the clutch motor 51 to actuate the clutch 50 such that the output power of the permanent-magnet-type electric motor 30 is distributed to at least the drive wheel 15 and thereby causes the leaning vehicle 1 to start moving. Moreover, the gear-shift controller 84 of the control unit 80 controls the shift motor 41 such that the multi-speed transmission is set to a non-neutral state, and more specifically, set to first gear in this embodiment. Thereby, the drive force outputted from the permanent-magnet-type electric motor 30 is transmitted to the drive wheel, and the leaning vehicle 1 starts moving.

The output power of the permanent-magnet-type electric motor 30 is transmitted to the drive wheel 15 before being transmitted to the engine 20, and the permanent-magnet-type electric motor 30 allows the leaning vehicle 1 to start moving smoothly.

After the drive wheel 15 starts to be rotated, the gear-shift controller 84 of the control unit 80 controls the clutch motor 51 such that the clutch 50 is operated to decrease the distribution ratio of the power of the permanent-magnet-type electric motor 30 to the drive wheel 15. In other words, the control unit 80 controls the clutch motor 51 to cause the clutch 50 to come to a state of disconnecting the power transmission route, whereby the distribution ratio of the output power of the permanent-magnet-type electric motor 30 to the drive wheel 15 is decreased. Accordingly, the distribution ratio of the output power of the permanent-magnet-type electric motor 30 to the engine 20 is increased, and the engine 20 is started. In this way, the power to drive the engine 20 increases, and therefore, the engine 20 of the leaning vehicle 1 is started smoothly.

While the engine 20 is being started, the gear-shift controller 84 of the control unit 80 causes the shift motor 41 to shift up the multi-speed transmission 40. By this control of the control unit 80, the multi-speed transmission 40 shifts up, for example, from first gear to second gear.

In this embodiment, the start conditions are the following three conditions:
1) from the vehicle body of the leaning vehicle 1, the control unit 80 receives a signal indicating that the key cylinder 111 has been turned on;
2) from the occupant sensor 161 built in the seat 16, the control unit 80 receives a signal indicating that a driver has sat on the seat 16; and
3) from the acceleration sensor 132, the control unit 80 receives a signal indicating that the acceleration grip 131 has been operated.

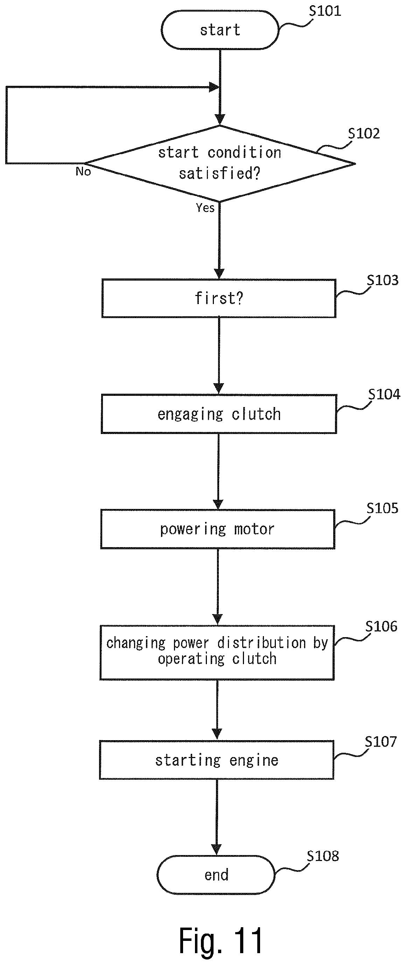

Next, with reference to FIG. 11, start control carried out by the control unit 80 of the leaning vehicle 1 will be briefly described. FIG. 11 is a flowchart showing a procedure of the start control carried out by the control unit 80 of the leaning vehicle 1. This flow starts at step S101. At this time, the clutch 50 of the leaning vehicle 1 is engaged, and the gear of the multi-speed transmission 40 is neutral. Alternatively, the clutch 50 is disengaged, and the gear of the multi-speed transmission 40 is first gear. Next at step S102, the starting electric generation controller 82 of the control unit 80 determines whether the start conditions are satisfied or not. Specifically, it is determined whether the start conditions 1) to 3) above are satisfied or not. When the starting electric generation controller 82 determines that the start conditions are satisfied (Yes at step S102), the flow proceeds to step S103. When the starting electric generation controller 82 determines that the start conditions are not satisfied (No at step S102), the flow remains at step S102, and the starting electric generation controller 82 of the control unit 80 determines again whether the start conditions are satisfied or not.

At step S103, the gear-shift controller 84 shifts the multi-speed transmission 40 to first gear. Specifically, the gear-shift controller 84 controls the shift motor 41 to shift the multi-speed transmission 40 to first gear. The gear-shift controller 84 shifts the multi-speed transmission 40, for example, from neutral to first gear. However, when the multi-speed transmission 40 is already first gear at the time of satisfaction of the start conditions, the gear-shift controller 84 keeps the multi-speed transmission 40 at first gear. After the gear-shift controller 84 shifts the multi-speed transmission 40 to first gear at step S103, the gear-shift controller 84 engages the clutch 50 at step S104. Specifically, the gear-shift controller 84 controls the clutch motor 51 to engage the clutch 50. After the gear-shift controller 84 engages the clutch 50 at step S104, the starting electric generation controller 82 starts powering the permanent-magnet-type electric motor 30. Specifically, the starting electric generation controller 82 controls the inverter 70 to drive the permanent-magnet-type electric motor 30.

After the starting electric generation controller 82 starts powering the permanent-magnet-type electric motor 30 at step S105, the gear-shift controller 84 changes the power distribution by changing the state of the clutch 50. Specifically, by controlling the clutch motor 51, the gear-shift controller 84 changes the clutch 50 from a fully engaged state to a half-clutch state. Alternatively, the clutch 50 may be changed to a completely disengaged state. After the gear-shift controller 84 changes the power distribution by changing the state of the clutch 50 at step S106, the combustion controller 83 starts the engine 20 at step S107. The combustion controller 83 starts combustion in the engine 20 by controlling the ignition plug 27 and the fuel spray device FI. After the combustion controller 83 starts the engine 20 at step S107, the control unit 80 completes the start control of the leaning vehicle 1 at step S108.

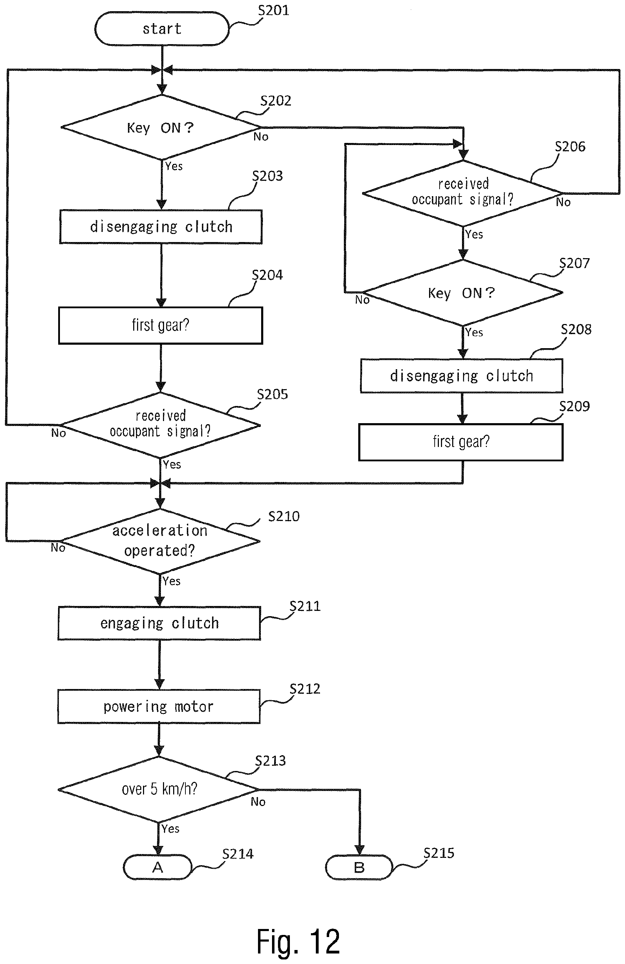

With reference to FIGS. 12 to 14, the start control carried out by the control unit 80 of the leaning vehicle 1 will be described in more detail. FIG. 12 is a flowchart showing a detailed procedure of the start control carried out by the control unit 80 of the leaning vehicle 1. The flow starts at step S201. At this time, the engine 20 and the permanent-magnet-type electric motor 30 of the leaning vehicle 1 are stopped, the clutch 50 is engaged, and the multi-speed transmission 40 is neutral. Additionally, the key cylinder 111 of the leaning vehicle 1 is off. This state of the leaning vehicle 1 is referred to as park mode.

Next at step 202, the starting electric generation controller 82 of the control unit 80 determines whether the key cylinder 111 has been turned on. When the driver turns on the key cylinder 111 with the key 112, the key cylinder 111 sends a key-on signal to the starting electric generation controller 82 of the control unit 80. The starting electric generation controller 82 of the control unit 80 determines whether the starting electric generation controller 82 has received the key-on signal. When the starting electric generation controller 82 has received the key-on signal (Yes at step S202), the flow proceeds to step S203. When the starting electric generation controller 82 has not received the key-on signal (No at step S202), the flow proceeds to step S206.

At step S203, the gear-shift controller 84 of the control unit 80 disengages the clutch 50. The gear-shift controller 84 disengages the clutch 50 by controlling the clutch motor 51. After the gear-shift controller 84 disengages the clutch 50 at step S203, the gear-shift controller 84 shifts the multi-speed transmission 40 to first gear at step S204. The gear-shift controller 84 shifts the multi-speed transmission 40 to first gear by controlling the shift motor 41. The state in which the key cylinder 111 is on, the clutch 50 is disengaged, and the multi-speed transmission 40 is in first gear is referred to as stop mode. In the stop mode, the driver can move the leaning vehicle 1. Specifically, the leaning vehicle 1 in the stop mode can be pushed along the road.

After the gear-shift controller 84 shifts the multi-speed transmission 40 to first gear at step S204, the starting electric generation controller 82 of the control unit 80 determines whether the starting electric generation controller 82 has received an occupant signal at step S205. When a driver straddles and sits on the seat 16 of the leaning vehicle 1, the occupant sensor 161 built in the seat 16 detects it and sends an occupant signal to the starting electric generation controller 82 of the control unit 80. When the starting electric generation controller 82 determines that the starting electric generation controller 82 has received the occupant signal at step S205 (Yes at step S205), the flow proceeds to step S210. When the starting electric generation controller 82 determines that the starting electric generation controller 82 has not received the occupant signal at step S205 (No at step S205), the flow returns to step S202, where the starting electric generation controller 82 determines again whether the key cylinder 111 has been turned on.

At step S206, the starting electric generation controller 82 of the control unit 80 determines whether the starting electric generation controller 82 has received the occupant signal. When the starting electric generation controller 82 of the control unit 80 determines at step S206 that the starting electric generation controller 82 has received the occupant signal (Yes at step S206), the flow proceeds to step S207. When the starting electric generation controller 82 of the control unit 80 determines at step S206 that the starting electric generation controller 82 has not received the occupant signal (No at step S206), the flow returns to step S202, where the starting electric generation controller 82 of the control unit 80 determines again whether the key cylinder 111 has been turned on. At step S207, the starting electric generation controller 82 determines whether the key cylinder 111 has been turned on. When the starting electric generation controller 82 has received the key-on signal from the key cylinder 111 (Yes at step S207), the flow proceeds to step S208. When the starting electric generation controller 82 has not received the key-on signal from the key cylinder 111 (No at step S207), the flow returns to step S206, where the starting electric generation controller 82 of the control unit 80 determines again whether the starting electric generation controller 82 has received the occupant signal. At step S208, the gear-shift controller 84 of the control unit 80 disengages the clutch 50. After the gear-shift controller 84 disengages the clutch 50 at step S208, the gear-shift controller 84 shifts the multi-speed transmission 40 to first gear at step S209. After the gear-shift controller 84 shifts the multi-speed transmission 40 to first gear at step S209, the flow proceeds to step S210.

At step S210, the starting electric generation controller 82 of the control unit 80 determines whether the acceleration grip 131 has been operated. From the acceleration sensor 132, the starting electric generation controller 82 receives a signal indicating that the acceleration grip 131 has been operated. When the starting electric generation controller 82 determines that the acceleration grip 131 has been operated (Yes at step S210), the flow proceeds to step S211. When the starting electric generation controller 82 determines that the acceleration grip 131 has not been operated (No at step S210), the flow returns to step S210, where the starting electric generation controller 82 determines again whether the acceleration grip 131 has been operated.

At step S211, the gear-shift controller 84 engages the clutch 50. The state in which the key cylinder 111 is on, the clutch 50 is engaged, the multi-speed transmission is first gear, and the acceleration grip is operated is referred to as start mode. After the clutch 50 is engaged at step S211, that is, after the leaning vehicle 1 becomes the start mode, the starting electric generation controller 82 starts powering the permanent-magnet-type electric motor 30 at step S212. The starting electric power generation controller 82 controls the output of the permanent-magnet-type electric motor 30 in accordance with the degree of opening of the acceleration grip 131. The starting electric generation controller 82 controls the permanent-magnet-type electric motor 30 by controlling the inverter 70. After the starting electric generation controller 82 starts powering the permanent-magnet-type electric motor 30 at step S212, the starting electric generation controller 82 determines whether the leaning vehicle 1 is moving at a speed over a reference speed. The reference speed is a speed fast enough for the leaning vehicle 1 to maintain the posture. For example, the starting electric generation controller 82 determines whether the moving speed of the leaning vehicle 1 is over 5 km/h. The starting electric generation controller 82 determines the moving speed of the leaning vehicle 1 from a vehicle-speed signal sent from the vehicle speed sensor 151. When the starting electric generation controller 82 determines that the moving speed of the leaning vehicle 1 is over 5 km/h (Yes at step S213), the flow proceeds to Flow A (step S214). When the starting electric generation controller 82 determines that the moving speed of the leaning vehicle 1 is not over 5 km/h (No at step S213), the flow proceeds to Flow B (step S215).

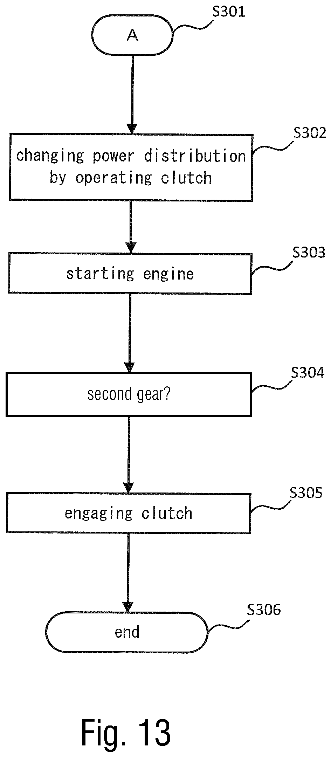

FIG. 13 is a flowchart showing a procedure in Flow A of the start control carried out by the control unit 80 of the leaning vehicle 1. Flow A starts at step S301. Next at step S302, the gear-shift controller 84 changes the power distribution by changing the state of the clutch 50. The clutch 50 decreases the distribution ratio of the output power of the permanent-magnet-type electric motor 30 to the drive wheel 15. Specifically, the control unit 80 changes the clutch 50 from an engaged state to a half-clutch state by controlling the clutch motor 51. Alternatively, the clutch 50 may be changed to a completely disengaged state. After the gear-shift controller 84 changes the power distribution by changing the state of the clutch 50 at step S302, the combustion controller 83 starts the engine 20 at step S303. The combustion chamber 83 starts combustion in the engine 20 by controlling the throttle valve SV, the ignition plug 27 and the fuel spray device FI. At step S302, the power distribution is changed by changing the state of the clutch 50, and the power transmission route from the permanent-magnet-type electric motor 30 to the drive wheel 15 is disconnected. Thereby, the permanent-magnet-type electric motor 30 drives only the crankshaft 24. Accordingly, the permanent-magnet-type electric motor 30 functions as a starter motor that starts the engine 20.

After the combustion controller 83 starts the engine 20 at step S303, the gear-shift controller 84 shifts the multi-speed transmission 40 to second gear at step S304. The gear-shift controller 84 shifts the multi-speed transmission 40 to second gear by controlling the shift motor 41. After the gear-shift controller 84 shifts the multi-speed transmission 40 to second gear at step S304, the gear-shift controller 84 engages the clutch 50 at step S305. Then, the clutch 50 first comes to a completely engaged state after the start of the engine 20. At the time, the leaning vehicle 1 is already moving, and the engagement of the clutch 50 after the start of the engine 20 does not have so big an impact on the smooth operation of the engine 20. After the gear-shift controller 84 engages the clutch 50 at step S305, the control unit 80 completes the start control at step S306.

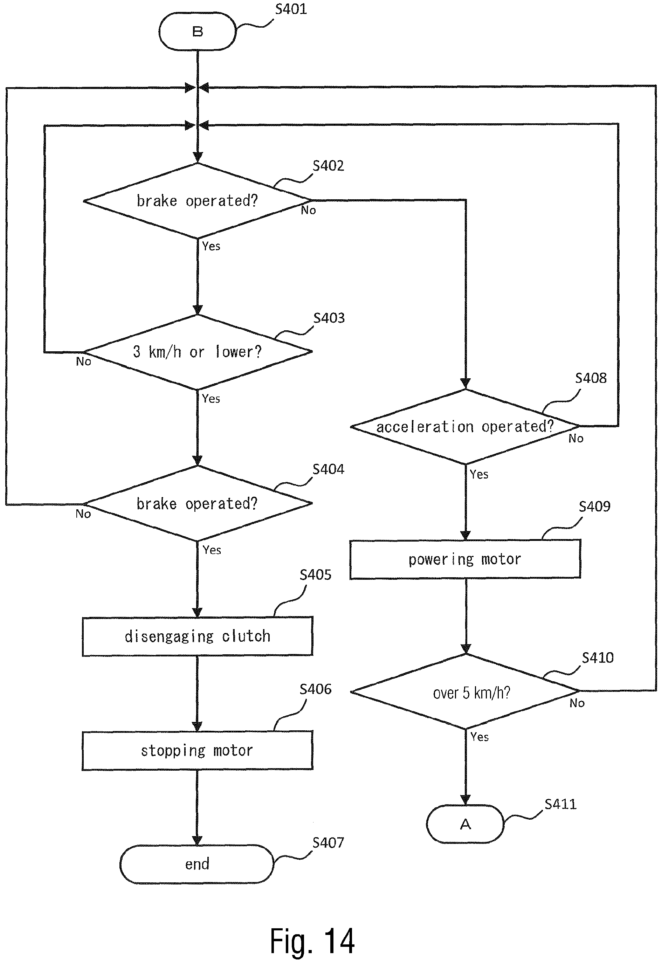

FIG. 14 is a flowchart showing a procedure in Flow B of the start control carried out by the control unit 80 of the leaning vehicle 1. Flow B starts at step S401. Next at step S402, the starting electric generation controller 82 determines whether the brake (the front-wheel brake 141 or the rear-wheel brake 152) is operated. The starting electric generation controller 82 determines whether either the front-wheel brake 141 or the rear-wheel brake 152 is operated, from the signal sent from the front-wheel brake sensor 142 and the signal sent from the rear-wheel brake sensor 153. When the starting electric generation controller 82 determines that the brake has been operated (Yes at step S402), the flow proceeds to step S403. When the starting electric generation controller 82 determines that the brake is not operated (No at step S402), the flow proceeds to step S408.

At step S403, the starting electric generation controller 82 determines whether the vehicle speed is 3 km/h or lower. The starting electric generation controller 82 receives a signal from the vehicle speed sensor 151 and determines whether the vehicle speed is 3 km/h or lower. When the starting electric generation controller 82 determines that the vehicle speed is 3 km/h or lower (Yes at step S403), the flow proceeds to step S404. When the starting electric generation controller 82 determines that the vehicle speed is not lower than 3 km/h (No at step S403), the flow returns to step S402, where the starting electric generation controller 82 determines again whether the brake is operated.

At step S404, the starting electric generation controller 82 of the control unit 80 determines whether the brake is operated. In other words, at step S404, the starting electric generation controller 82 of the control unit 80 determines whether the brake is not operated. When the starting electric generation controller 82 determines that the brake is operated (Yes at step S404), the flow proceeds to step S405. When the starting electric generation controller 82 determines that the brake is not operated, the flow returns to step S402, where the starting electric generation controller 82 determines again whether the brake is operated.

At step S405, the gear-shift controller 84 disengages the clutch 50. After the gear-shift controller 84 disengages the clutch 50 at step S405, the starting electric generation controller 82 de-activates the permanent-magnet-type electric motor 30. After the starting electric generation controller 82 de-activates the permanent-magnet-type electric motor 30 at step S405, the control unit 80 terminates the start control at step S407.

At step S408, the starting electric generation controller 82 of the control unit 80 determines whether the acceleration grip 131 is operated. From the acceleration sensor 132, the starting electric generation controller 82 receives a signal indicating that the acceleration grip 131 is operated. When the starting electric generation controller 82 determines that the acceleration grip 131 is operated (Yes at step S408), the flow proceeds to step S409. When the starting electric generation controller 82 determines that the acceleration grip 131 is not operated (No at step S408), the flow returns to step S402, where the starting electric generation controller 82 determines again whether the brake is operated.

At step S409, the starting electric generation controller 82 starts powering the permanent-magnet-type electric motor 30. The starting electric generation controller 82 controls the output of the permanent-magnet-type electric motor 30 in accordance with the degree of opening of the throttle valve SV (the degree of opening of the acceleration grip 131). After the starting electric generation controller 82 starts powering the permanent-magnet-type electric motor 30 at step S409, the starting electric generation controller 82 determines whether the moving speed of the leaning vehicle 1 is over 5 km/h. When the starting electric generation controller 82 determines that the moving speed of the leaning vehicle 1 is over 5 km/h (Yes at step S410), the flow proceeds to Flow A (step S411). When the starting electric generation controller 82 determines that the moving speed of the leaning vehicle 1 is not over 5 km/h (No at step S410), the flow returns to step S402, where the starting electric generation controller 82 determines again whether the brake is operated.

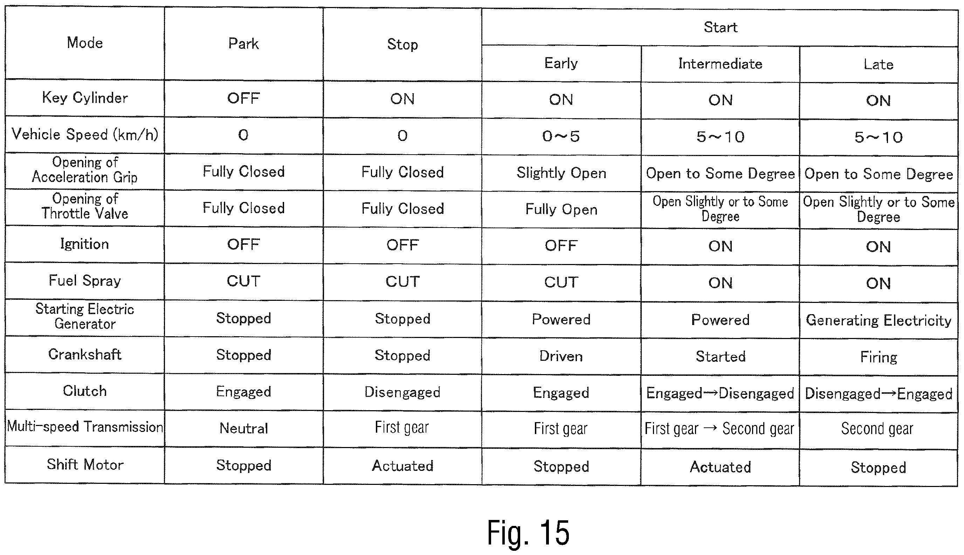

The state of the leaning vehicle 1 in each of the modes defined above will be described below. FIG. 15 is a chart showing the state of the leaning vehicle shown in FIG. 1 in each of the modes. The state of the leaning vehicle 1 is examined with respect to mode, key cylinder 111, moving speed, degree of opening of acceleration grip 131, degree of opening of throttle valve SV, ignition, fuel spray, starting generator (permanent-magnet-type electric motor 30), crankshaft 24, clutch 50, multi-speed transmission 40, and shift motor 41. The state of the leaning vehicle 1 about these items in each of the modes will be described.

The leaning vehicle 1 in the park mode is in the following state: the key cylinder 111 is off the moving speed is 0 km/h; the acceleration is fully closed (the acceleration grip 131 is not operated at all); the throttle valve SV is fully closed; the ignition is off no fuel spray is performed (the fuel spray is cut); the permanent-magnet-type electric motor 30 is stopped; the crankshaft 24 is stopped; the clutch 50 is engaged; the multi-speed transmission 40 is neutral; and the shift motor 41 is stopped.

The leaning vehicle 1 in the stop mode is in the following state: the key cylinder 111 is on; the moving speed is 0 km/h; the acceleration is fully closed (the acceleration grip 131 is not operated at all); the throttle valve SV is fully closed; the ignition is off no fuel spray is performed (the fuel spray is cut); the permanent-magnet-type electric motor 30 is stopped; the crankshaft 24 is stopped; the clutch 50 is disengaged; the multi-speed transmission 40 is first gear; and the shift motor 41 is stopped.

The state of the leaning vehicle 1 in the start mode will be described. The start mode is divided into an early-stage start mode, an intermediate-stage start mode, and a late-stage start mode. The leaning vehicle 1 in the early-stage start mode is in the following state: the key cylinder 111 is on; the moving speed is 0 to 5 km/h; the acceleration is slightly open (the acceleration grip 131 is operated a little); the throttle valve SV is fully open; the ignition is off; no fuel spray is performed (the fuel spray is cut); the permanent-magnet-type electric motor 30 is powered; the crankshaft 24 is driven by a motor (specifically by the permanent-magnet-type electric motor 30); the clutch 50 is engaged; the multi-speed transmission 40 is first gear; and the shift motor 41 is activated.

The leaning vehicle 1 in the intermediate-stage start mode is in the following state: the key cylinder 111 is on; the moving speed is 5 to 10 km/h; the acceleration is open to some degree (the acceleration grip 131 is operated to some degree); the degree of opening of the throttle valve SV is open slightly or to some degree; the ignition is on; fuel spray is started (the fuel spray is on); the permanent-magnet-type electric motor 30 is powered; the crankshaft 24 is started, that is, the engine 20 is started; the clutch 50 is changed from engaged to disengaged; and the multi-speed transmission 40 is shifted from first gear to second gear by operation of the shift motor 41.

The leaning vehicle 1 in the late-stage start mode is in the following state: the key cylinder 111 is on; the moving speed is 5 to 10 km/h; the acceleration is open to some degree (the acceleration grip 131 is operated to some degree); the throttle valve SV is open slightly or to some degree; the ignition is on; fuel spray is started (the fuel spray is on); the permanent-magnet-type electric motor 30 generates electricity; the crankshaft 24 is firing, that is, driven by combustion in the engine 20; the clutch 50 is changed from disengaged to an engaged; the multi-speed transmission 40 is second gear; and the shift motor 41 is stopped.

### List of Reference Signs

1: leaning vehicle
10: engine unit
11: vehicle body
12: front fork
13: handlebar
14: front wheel
15: drive wheel (rear wheel)
16: seat
17: electric storage device
18: rear arm
20: engine
24: crankshaft
30: permanent-magnet-type electric motor
31: rotor
32: stator
33: rotor position detector
40: multi-speed transmission
41: shift motor
42: input shaft
43: output shaft
47: gear setting mechanism
50: clutch
51: clutch motor
52: clutch engaging/disengaging mechanism
70: inverter
80: control unit

## Claims

1. A leaning vehicle (1) comprising:
an engine (20) including a rotatable crankshaft (24) and configured to output power generated through gas combustion as a torque and a rotation speed of the crankshaft (24);
a permanent-magnet-type electric motor (30) that is connected to the crankshaft (24) in such a manner as to rotate at a fixed speed ratio to the rotation speed of the crankshaft (24), and is supplied with electric power to output power;
a drive wheel (14, 15) that is configured to receive power outputted from at least either the engine (20) or the permanent-magnet-type electric motor (30); the leaning vehicle being **characterized by**
a clutch (50) that is configured to change the distribution ratio of the output power of the permanent-magnet-type electric motor (30) between the engine (20) and the drive wheel (14, 15);
a clutch motor (51) that is configured to operate the clutch (50); and
a control unit (80) that is configured to:
when a start condition is to be satisfied in the leaning vehicle (1), actuate the permanent-magnet-type electric motor (30) while the engine (20) is in a stopped state, and also control the clutch motor (51) to operate the clutch (50) to distribute the output power of the permanent-magnet-type electric motor (30) to at least the drive wheel (14, 15), whereby the leaning vehicle (1) starts moving; and
after the drive wheel (14, 15) starts to be rotated, control the clutch motor (51) to operate the clutch (50) so as to decrease the distribution ratio of the output power of the permanent-magnet-type electric motor (30) to the drive wheel (14, 15), thereby increasing the distribution ratio of the output power of the permanent-magnet-type electric motor (30) to the engine (20), whereby the engine (20) is started.

2. The leaning vehicle (1) according to claim 1, wherein:
the clutch (50) is located on a power transmission route between the engine (20) and the drive wheel (14, 15); and
the clutch (50) is capable of being between a state of disconnecting the power transmission route and a state of connecting the power transmission route, thereby changing the distribution ratio of the output power of the permanent-magnet-type electric motor (30) between the engine (20) and the drive wheel (14, 15).

3. The leaning vehicle (1) according to claim 2, wherein
the control unit (80) is configured to control the clutch motor (51) such that the clutch (50) is capable of being toward the state of connecting the power transmission route to distribute the output power of the permanent-magnet-type electric motor (30) to at least the drive wheel (14, 15) and such that the clutch (50) is capable of being toward the state of disconnecting the power transmission route to decrease the distribution ratio of the output power of the permanent-magnet-type electric motor (30) to the drive wheel (14, 15).

4. The leaning vehicle (1) according to any one of claims 1 to 3, further comprising:
a multi-speed transmission (40) that is located on a power transmission route between the permanent-magnet-type electric motor (30) and the drive wheel (14, 15), and is configured to change the speed ratio between the permanent-magnet-type electric motor (30) and the drive wheel (14, 15) in a step-by-step manner; and
a shift motor (41) that is configured to drive the multi-speed transmission (40),
wherein
when the leaning vehicle (1) satisfies the start condition, the control unit (80):
is configured to cause the shift motor (41) to change the multi-speed transmission (40) to a non-neutral state; to cause the clutch motor (51) to drive the clutch (50) to distribute the output power of the permanent-magnet-type electric motor (30) to the drive wheel (14, 15); and to cause the permanent-magnet-type electric motor (30) to start motoring.

5. The leaning vehicle (1) according to claim 4, wherein:
after the drive wheel (14, 15) starts to be rotated, the control unit (80) is configured to cause the clutch motor (51) to operate the clutch (50) so as to decrease the distribution ratio of the output power of the permanent-magnet-type electric motor (30) to the drive wheel (14, 15), thereby increasing the distribution ratio of the output power of the permanent-magnet-type electric motor (30) to the engine (20), whereby the engine (20) is started; and
while the engine (20) is being started, the control unit (80) is configured to cause the shift motor (41) to shift up the multi-speed transmission (40).

6. The leaning vehicle (1) according to claim 4 or 5, wherein
the multi-speed transmission (40) is a dog transmission.

7. The leaning vehicle (1) according to any one of claims 1 to 6, further comprising an acceleration grip (131) that is attached to a steering handle, is operable by a driver of the leaning vehicle (1), and is configured to send a signal in accordance with the amount of operation of the acceleration grip (131) via the control unit (80);
wherein
when the control unit (80) receives, from the acceleration grip (131), a signal indicating that the acceleration grip (131) has been operated, the control unit (80) is configured to determine that the start condition is to be satisfied in the leaning vehicle (1).

8. The leaning vehicle (1) according to claim 7, further comprising a seat (16) including an in-built sensor (161) that is configured to send an occupant signal indicating that the seat (16) is being occupied to the control unit (80), when a driver sits on the seat (16),
wherein
when the control unit (80) receives at least the occupant signal from the in-built sensor (161) of the seat (16) and the signal indicating that the acceleration grip (131) has been operated from the acceleration grip (131), the control unit (80) is configured to determine that the start condition is to be satisfied in the leaning vehicle (1).

9. The leaning vehicle (1) according to any one of claims 1 to 8, without a torque converter being located on the power transmission route between the engine (20) and the drive wheel (14, 15).

10. The leaning vehicle (1) according to any one of claims 1 to 9, further comprising:
a front wheel (14) connected to a front fork, supported by a vehicle body (11) of the leaning vehicle (1), in such a manner as to be rotatable; and
a rear wheel (15) connected to a rear arm (18), supported by the vehicle body (11) of the leaning vehicle (1), in such a manner as to be rotatable,
the drive wheel (14, 15) being either the front wheel(s) (14) or being the rear wheel(s) (15).

## Patentansprüche

1. Ein Neigungsfahrzeug (1), das folgende Merkmale aufweist:
einen Motor (20), der eine drehbare Kurbelwelle (24) umfasst und konfiguriert ist, Leistung, die durch Gasverbrennung erzeugt wird, als ein Drehmoment und eine Drehgeschwindigkeit der Kurbelwelle (24) auszugeben;
einen Elektromotor vom Permanentmagnet-Typ (30), der mit der Kurbelwelle (24) so verbunden ist, um sich mit einem festen Geschwindigkeitsverhältnis zu der Drehgeschwindigkeit der Kurbelwelle (24) zu drehen, und mit elektrischer Leistung versorgt wird, um Leistung auszugeben;
ein Antriebsrad (14, 15), das konfiguriert ist, Leistung zu empfangen, die zumindest von entweder dem Motor (20) oder dem Elektromotor von Permanentmagnet-Typ (30) ausgegeben wird;
wobei das Neigungsfahrzeug **gekennzeichnet ist durch**
eine Kupplung (50), die konfiguriert ist, das Verteilungsverhältnis der Ausgabeleistung des Elektromotors vom Permanentmagnet-Typ (30) zwischen dem Motor (20) und dem Antriebsrad (14, 15) zu ändern;
einen Kupplungsmotor (51), der konfiguriert ist, die Kupplung (50) zu betätigen; und
eine Steuereinheit (80), die konfiguriert ist zum:
wenn eine Startbedingung in dem Neigungsfahrzeug (1) zu erfüllen ist, Betätigen des Elektromotors von Permanentmagnet-Typ (30), während der Motor (20) in einem angehaltenen Zustand ist, und auch Steuern des Kupplungsmotors (51), um die Kupplung (50) zu betätigen, um die Ausgabeleistung des Elektromotors vom Permanentmagnet-Typ (30) an zumindest das Antriebsrad (14, 15) zu verteilen, wobei das Neigungsfahrzeug (1) beginnt, sich zu bewegen; und
nachdem das Antriebsrad (14, 14) zu drehen beginnt, Steuern des Kupplungsmotors (51), um die Kupplung (50) zu betätigen, um das Verteilungsverhältnis der Ausgabeleistung des Elektromotors vom Permanentmagnet-Typ (30) zu dem Antriebsrad (14, 15) zu verringern, wodurch das Verteilungsverhältnis der Ausgabeleistung des Elektromotors vom Permanent-magnet-Typ (30) zu dem Motor (20) erhöht wird, wodurch der Motor (20) gestartet wird.

2. Das Neigungsfahrzeug (1) gemäß Anspruch 1, bei dem:
die Kupplung (50) sich auf einem Leistungsübertragungsleitweg zwischen dem Motor (20) und dem Antriebsrad (14, 15) befindet; und
die Kupplung (50) zwischen einem Zustand des Trennens des Leistungsübertragungsleitwegs und einem Zustand des Verbindens des Leistungsübertragungsleitwegs sein kann, wodurch das Verteilungsverhältnis der Ausgabeleistung des Elektromotors vom Permanentmagnet-Typ (30) zwischen dem Motor (20) und dem Antriebsrad (14, 15) geändert wird.

3. Das Neigungsfahrzeug (1) gemäß Anspruch 2, bei dem
die Steuereinheit (80) konfiguriert ist, den Kupplungsmotor (51) so zu steuern, dass die Kupplung (50) in den Zustand des Verbindens des Leistungsübertragungsleitwegs kommen kann, um die Ausgabeleistung des Elektromotors vom Permanent-magnet-Typ (30) an zumindest das Antriebsrad (14, 15) zu verteilen, und so dass die Kupplung (50) in den Zustand des Trennens des Leistungsübertragungsleitwegs kommen kann, um das Verteilungsverhältnis der Ausgabeleistung des Elektromotors vom Permanentmagnet-Typ (30) zu dem Antriebsrad (14, 15) zu verringern.

4. Das Neigungsfahrzeug (1) gemäß einem der Ansprüche 1 bis 3, das ferner folgende Merkmale aufweist:
ein Mehrganggetriebe (40), das sich auf einem Leistungsübertragungsleitweg zwischen dem Elektromotor vom Permanentmagnet-Typ (30) und dem Antriebsrad (14, 15) befindet und konfiguriert ist, das Geschwindigkeitsverhältnis zwischen dem Elektromotor vom Permanentmagnet-Typ (30) und dem Antriebsrad (14, 15) stufenweise zu ändern; und
einen Schaltmotor (41), der konfiguriert ist, das Mehrganggetriebe (40) anzutreiben,
wobei
wenn das Neigungsfahrzeug (1) die Startbedingung erfüllt, die Steuereinheit (80):
konfiguriert ist, zu bewirken, dass der Schaltmotor (41) das Mehrganggetriebe (40) in einen Nicht-Neutral-Zustand ändert; zu bewirken, dass der Kupplungsmotor (51) die Kupplung (50) antreibt, um die Ausgabeleistung des Elektromotors vom Permanentmagnet-Typ (30) an das Antriebsrad (14, 15) zu verteilen; und zu bewirken, dass der Elektromotor vom Permanentmagnet-Typ (30) in Gang gesetzt wird.

5. Das Neigungsfahrzeug (1) gemäß Anspruch 4, bei dem:
nachdem das Antriebsrad (14, 15) zu drehen beginnt, die Steuereinheit (80) konfiguriert ist, zu bewirken, dass der Kupplungsmotor (51) die Kupplung (50) betätigt, um das Verteilungsverhältnis der Ausgabeleistung des Elektromotors vom Permanentmagnet-Typ (30) zu dem Antriebsrad (14, 15) zu verringern, wodurch das Verteilungsverhältnis der Ausgabeleistung des Elektromotors vom Permanentmagnet-Typ (30) zu dem Motor (20) erhöht wird, wodurch der Motor (20) gestartet wird; und
während der Motor (20) gestartet wird, die Steuereinheit (80) konfiguriert ist, zu bewirken, dass der Schaltmotor (41) das Mehrganggetriebe (40) hochschaltet.

6. Das Neigungsfahrzeug (1) gemäß Anspruch 4 oder 5, bei dem
das Mehrfachgeschwindigkeitsgetriebe (40) ein Klauengetriebe ist.

7. Das Neigungsfahrzeug (1) gemäß einem der Ansprüche 1 bis 6, das ferner einen Beschleunigungshebel (131) aufweist, der an einem Lenkergriff angebracht ist, durch einen Fahrer des Neigungsfahrzeugs (1) betätigt werden kann und konfiguriert ist, ein Signal gemäß dem Betätigungsbetrag des Beschleunigungshebels (131) über die Steuereinheit (80) zu senden;
wobei
wenn die Steuereinheit (80) von dem Beschleunigungshebel (131) ein Signal empfängt, das anzeigt, dass der Beschleunigungshebel (131) betätigt wurde, die Steuereinheit (80) konfiguriert ist, zu bestimmen, dass die Startbedingung in dem Neigungsfahrzeug (1) zu erfüllen ist.

8. Das Neigungsfahrzeug (1) gemäß Anspruch 7, das ferner einen Sitz (16) aufweist, der einen eingebauten Sensor (161) umfasst, der konfiguriert ist, ein Besetztsignal, das anzeigt, dass der Sitz (16) besetzt ist, an die Steuereinheit (80) zu senden, wenn ein Fahrer auf dem Sitz (16) sitzt,
wobei
wenn die Steuereinheit (80) zumindest das Besetztsignal von dem eingebauten Sensor (161) des Sitzes (16) und das Signal, das anzeigt, dass der Beschleunigungshebel (131) betätigt wurde, von dem Beschleunigungshebel (131) empfängt, die Steuereinheit (80) konfiguriert ist, zu bestimmen, dass die Startbedingung in dem Neigungsfahrzeug (1) zu erfüllen ist.

9. Das Neigungsfahrzeug (1) gemäß einem der Ansprüche 1 bis 8, bei dem sich auf dem Leistungsübertragungsleitweg zwischen dem Motor (20) und dem Antriebsrad (14, 15) kein Drehmomentwandler befindet.

10. Das Neigungsfahrzeug (1) gemäß einem der Ansprüche 1 bis 9, das ferner folgende Merkmale aufweist:
ein Vorderrad (14), das mit einer Vordergabel verbunden ist, getragen durch einen Fahrzeugkörper (11) des Neigungsfahrzeugs (1), um drehbar zu sein; und
ein Hinterrad (15), das mit einem hinteren Arm (18) verbunden ist, getragen durch den Fahrzeugkörper (11) des Neigungsfahrzeugs (1), um drehbar zu sein,
wobei das Antriebsrad (14, 15) entweder das/die Vorderrad/Vorderräder (14) oder das/die Hinterrad/Hinterräder (15) ist.

## Revendications

1. Véhicule inclinable (1), comprenant:
un moteur (20) comportant un vilebrequin rotatif (24) et configuré pour sortir l'énergie générée par la combustion de gaz sous forme d'un couple et d'une vitesse de rotation du vilebrequin (24);
un moteur électrique (30) du type à aimant permanent qui est connecté au vilebrequin (24) de manière à tourner à un rapport de vitesse fixe par rapport à la vitesse de rotation du vilebrequin (24), et qui est alimenté en énergie électrique pour sortir de l'énergie;
une roue motrice (14, 15) qui est configurée pour recevoir l'énergie sortie par au moins soit le moteur (20), soit le moteur électrique de type à aimant permanent (30);
le véhicule inclinable étant **caractérisé par**
un embrayage (50) qui est configuré pour modifier le rapport de distribution de l'énergie de sortie du moteur électrique de type à aimant permanent (30) entre le moteur (20) et la roue motrice (14, 15);
un moteur d'embrayage (51) qui est configuré pour actionner l'embrayage (50); et
une unité de commande (80) qui est configurée pour:
lorsqu'une condition de démarrage doit être remplie dans le véhicule inclinable (1), actionner le moteur électrique de type à aimant permanent (30) tandis que le moteur (20) est à l'état arrêté, et également commander le moteur d'embrayage (51) pour actionner l'embrayage (50) pour distribuer l'énergie de sortie du moteur électrique de type à aimant permanent (30) vers au moins la roue motrice (14, 15), d'où le véhicule inclinable (1) commence à se déplacer; et
après que la roue motrice (14, 15) commence à tourner, commander le moteur d'embrayage (51) pour actionner l'embrayage (50) de manière à diminuer le rapport de distribution de l'énergie de sortie du moteur électrique de type à aimant permanent (30) vers la roue motrice (14, 15), augmentant ainsi le rapport de distribution de l'énergie de sortie du moteur électrique de type à aimant permanent (30) vers le moteur (20), d'où le moteur (20) démarre.

2. Véhicule inclinable (1) selon la revendication 1, dans lequel:
l'embrayage (50) est situé sur une route de transmission d'énergie entre le moteur (20) et la roue motrice (14, 15); et
l'embrayage (50) est à même de se trouver entre un état de déconnexion de la route de transmission d'énergie et un état de connexion de la route de transmission d'énergie, modifiant ainsi le rapport de distribution de l'énergie de sortie du moteur électrique de type à aimant permanent (30) entre le moteur (20) et la roue motrice (14, 15).

3. Véhicule inclinable (1) selon la revendication 2, dans lequel
l'unité de commande (80) est configurée pour commander le moteur d'embrayage (51) de sorte que l'embrayage (50) soit à même de se situer vers l'état de connexion de la route de transmission d'énergie pour distribuer l'énergie de sortie du moteur électrique de type à aimant permanent (30) vers au moins la roue motrice (14, 15) et de sorte que l'embrayage (50) soit à même de se situer vers l'état de déconnexion de la route de transmission d'énergie pour diminuer le rapport de distribution de l'énergie de sortie du moteur électrique de type à aimant permanent (30) vers la roue motrice (14, 15).

4. Véhicule inclinable (1) selon l'une quelconque des revendications 1 à 3, comprenant par ailleurs:
une transmission à plusieurs vitesses (40) qui est située sur une route de transmission d'énergie entre le moteur électrique de type à aimant permanent (30) et la roue motrice (14, 15), et qui est configurée pour modifier pas à pas le rapport de vitesse entre la moteur électrique à aimant (30) et la roue motrice (14, 15); et
un moteur de changement de vitesse (41) qui est configuré pour entraîner la transmission à plusieurs vitesses (40),
dans lequel
lorsque le véhicule inclinable (1) remplit la condition de démarrage, l'unité de commande (80):
est configurée pour amener le moteur de changement de vitesse (41) à changer la transmission à plusieurs vitesses (40) à un état non neutre; pour amener le moteur d'embrayage (51) à entraîner l'embrayage (50) pour distribuer l'énergie de sortie du moteur électrique de type à aimant permanent (30) vers la roue motrice (14, 15); et pour amener le moteur électrique du type à aimant permanent (30) à commencer à sortir de l'énergie.

5. Véhicule inclinable (1) selon la revendication 4, dans lequel:
après que la roue motrice (14, 15) commence à tourner, l'unité de commande (80) est configurée pour amener le moteur d'embrayage (51) à actionner l'embrayage (50) de manière à diminuer le rapport de distribution de l'énergie de sortie du moteur électrique de type à aimant permanent (30) vers la roue motrice (14, 15), augmentant ainsi le rapport de distribution de l'énergie de sortie du moteur électrique de type à aimant permanent (30) vers le moteur (20), d'où le moteur (20) démarre; et
tandis que le moteur (20) est démarré, l'unité de commande (80) est configurée pour amener le moteur de changement de vitesse (41) à changer vers le haut la vitesse de la transmission à plusieurs vitesses (40).

6. Véhicule inclinable (1) selon la revendication 4 ou 5, dans lequel
la transmission à plusieurs vitesses (40) est une transmission à crabots.

7. Véhicule inclinable (1) selon l'une quelconque des revendications 1 à 6, comprenant par ailleurs une poignée d'accélération (131) qui est fixée à une poignée de direction, qui peut être actionnée par un conducteur du véhicule inclinable (1) et qui est configurée pour envoyer un signal selon la quantité d'actionnement de la poignée d'accélération (131) par l'intermédiaire de l'unité de commande (80);
dans lequel
lorsque l'unité de commande (80) reçoit, de la poignée d'accélération (131), un signal indiquant que la poignée d'accélération (131) a été actionnée, l'unité de commande (80) est configurée pour déterminer que la condition de démarrage doit être remplie dans le véhicule inclinable (1).

8. Véhicule inclinable (1) selon la revendication 7, comprenant par ailleurs un siège (16) comportant un capteur intégré (161) qui est configuré pour envoyer à l'unité de commande (80) un signal d'occupant indiquant que le siège (16) est occupé lorsqu'un conducteur est assis sur le siège (16),
dans lequel
lorsque l'unité de commande (80) reçoit au moins le signal d'occupant du capteur intégré (161) du siège (16) et que le signal indique que la poignée d'accélération (131) a été actionnée depuis la poignée d'accélération (131), l'unité de commande (80) est configurée pour déterminer que la condition de démarrage doit être remplie dans le véhicule inclinable (1).

9. Véhicule inclinable (1) selon l'une quelconque des revendications 1 à 8, sans convertisseur de couple situé sur la route de transmission d'énergie entre le moteur (20) et la roue motrice (14, 15).

10. Véhicule inclinable (1) selon l'une quelconque des revendications 1 à 9, comprenant par ailleurs:
une roue avant (14) connectée à une fourche avant, supportée par un corps de véhicule (11) du véhicule inclinable (1), de manière à pouvoir tourner; et
une roue arrière (15) reliée à un bras arrière (18), supportée par le châssis de véhicule (11) du véhicule inclinable (1), de manière à pouvoir tourner,
la roue motrice (14, 15) étant soit la ou les roues avant (14), soit la ou les roues arrière (15).
